(19) Europäisches Patentamt

European Patent Office

Office européen des brevets

(11) Publication number: 0 567 699 A1

## (12) EUROPEAN PATENT APPLICATION

(21) Application number: 92303913.5

(22) Date of filing: 30.04.92

(51) Int. Cl.5: G06F 9/44, G06F 9/46, G06F 3/033

(43) Date of publication of application:
03.11.93 Bulletin 93/44

(84) Designated Contracting States:
DE FR GB

(71) Applicant: Hewlett-Packard Company
3000 Hanover Street
Palo Alto, California 94304(US)

(72) Inventor: Barman, Harry Justin, c/o Hewlett
Packard Limited
Building 2,
Filton Road
Stoke Gifford, Bristol BS12 6OZ(GB)

(74) Representative: Smith, Denise Mary et al
Hewlett-Packard Limited,
Filton Road
Bristol BS12 6OZ (GB)

(54) Object based system.

(57) An object-based system designed to permit a user to configure a task in a simple manner by selecting Activity Objects and Mobile Objects to represent parts of the task and items to be the subject of the task respectively and comprising Pipe Components for interconnecting Activity Objects. Mobile Objects are transferred between Activity Objects via Pipe Components. The transfer is animated for the user, who can interact to drop a Mobile Object onto a Pipe Component or to remove a Mobile Object from a Pipe Component.

Figure 2

Technical Field

The present invention relates to an object based computer system. An object based computer system is one which comprises several software components or "objects". The term 'object-based' can mean that the system is written using an object-oriented programming language, such as C + +. Alternatively, a more conventional procedural programming language may be used in such a way as to portray the system to a user as comprising a collection of objects each of which has its own functionality and is able to interact with other objects in the system. Either approach can be taken in connection with the present invention. In any case, the present invention relates to a system which has an object oriented user interface.

The principles of object-oriented programming are now well-known and widely practised. Only a short introduction to the principles will be given here.

A software object has its own data and associated methods. The system operates by objects sending "messages" to one another eg. data, instructions, requests etc. Generally, an object can be regarded as a discrete entity eg. it can individually be moved, copied, destroyed etc, and each object has a unique identifier.

When designing an object based system, as an optimisation feature it is possible to define a hierarchical classification system of class objects in which class objects lower down the hierarchy (sub-classes) "inherit" characteristics from their superclasses. An example from the field of biology is shown in Figure A.

The Class Object Animals has certain data and methods associated with it which are generic to all Animal Objects. Its sub-classes, Class Object Vertebrates and Class Object Invertebrates inherit the characteristics of their superclass Animals and, in addition, each contains extra data and/or methods specific to their specific sub-class and so on down the classification tree. Each of the links in Fig A is an "AKO" (a kind of) link, eg. a mammal is a kind of vertebrate and a primate is a kind of mammal.

When it is desired to create an instance of a class, eg. a particular Kangaroo called Hoppy, this can be done by taking a copy of a Kangaroo Class Object and specifying Hoppy's characteristics of interest, eg, height, weight or whatever. The Hoppy Object has an "ISA" (is a) link to the Kangaroo Class Object.

Such a system reduces the amount of code needing to be written for new objects since objects automatically use generic code of superclasses (AKO Links) and relevant Class Objects (ISA Links).

A reference for further information on the advantages and underlying principles of object based systems is Object oriented design with applications - Grady Booch. ISBN 0-8053-0091-0. An example of an object based software product is Hewlett-Packard's NewWave Environment. A useful reference is the NewWave General Information Manual for Software Developers, Reference No. 5952-2667.

As well as ISA and AKO links which may be inherent in the system design there may be other kinds of specific object links designed into a system. A link between two objects normally takes the form of one or both of the objects having a reference to the other one. One type of link which is a feature of Hewlett-Packard,s NewWave software is a "parent-child" or "containership" link (or sometimes referred to as a "ownership" link). A parent-child link has several properties. It is existence-preserving ie. an object will not be destroyed while it is a child of some other object. Parent-child links also have an effect on move and copy operations eg. copying a child object automatically causes the copy object to have links to the same parent object(s) as the original objects. In NewWave software, an object can have parent links to more than one other object.

An object may comprise two parts - one to hold semantic data and the other to hold presentation data. As used herein, a "semantic object" or a "semantic part" of an object is an object or object part which has stored data and which is, by virtue of the stored data, persistent. A "presentation object" or "presentation part" is created to present to a user the data of a semantic object or semantic object part and has no persistence in the system on termination of the user session.

A large number of commercially available systems now possess a windows-based graphical user interface. A system can be arranged so that software windows are also treated as objects and have inter object links with other windows.

In this specification, when there is a risk of confusion between window objects and other objects the latter will be termed "semantic objects". Generally, however, the term "object" means "semantic object".

Brief Description of Prior Art

There are several object-based software products already on the market and in use. These include object-based languages, such as C + +, enabling programmers to write object-based applications; object-based environments, such as Hewlett-Packard's NewWave, enabling software developers to implement applications using the object-based environment, and object-based applications software, such as AmiPro word processing software, written for specific business applications.

Systems exist which allow users to define tasks to be handled by a software application. These tend to be one of two types:

i) high-level programming languages which are written specifically for a particular field of application and tailored to suit that application eg. Hewlett-Packard's NewWave Agent Task Language;

ii) systems which allow a user to perform a sequence of actions and which subsequently repeat or emulate this sequence eg. Hewlett-Packard's NewWave Agent Task Recorder or Microsoft Windows Recorder application.

Problems exist with both of the approaches described above. The key problem with the first approach is that it is one which requires the skills of specialists in the particular programming language and it is not an approach available in practice to the non-programmer.

The key problem with the second approach is that it is limited to very specific activities and is therefore rather restricted in scope.

Generally speaking, software packages are becoming increasing rich in functionality. However this additional functionality is not always exactly what is required by users. What is lacking in the marketplace is software which the non-programming user can employ to define the functionality required to meet specific user needs. This is what the present invention aims to provide.

According to the present invention we provide an object based-computer system comprising means for storing objects, handling inter-object messaging and object processing and a graphical user interface for representing objects to a user comprising:

a first class of object for holding user data and/or performing an application-level function and which is capable of maintaining references to other objects;

a second class of object for acting as an intermediary between two objects of the first class so as to transfer another object between the two objects of the first class;

a user interface enabling a user to select objects of the first class and to link these together using objects of the second class in order to configure a user-defined task, and

means for transferring objects between objects of the first class via objects of the second class in a manner so that the progress of such transfers is indicated graphically to the user.

A system according to the present invention has the advantage that it permits a user to configure tasks to be performed by the system and allows a user to monitor the progress of tasks being performed. In this way, user interaction with the system is facilitated and, in addition, any problems can be identified quickly.

A system according to the present invention has the further advantage that objects can be transferred between other objects via an intermediary object so that the objects on the giving and receiving ends of the transfer need not know each others identity in order for the transfer to take place.

Another advantage of using intermediary objects for transferring objects between other objects is that this provides a degree of buffering as will be more fully explained in the description of an implementation of the present invention which follows.

Preferably, the system comprises a mechanism for recognising user input events concerning the intermediary objects and for responding to such events whilst user-defined tasks are being performed. This feature enables a user to interact with the system during operation eg. a user can choose to select an object and to 'drop' it directly onto an intermediary object. In this regard the system is not restricted to operating in only one of two possible modes, namely configuration by a user and execution of a task.

In the embodiment to be described an intermediary object is configured to accept an object directly as a result of a specified user action as well as from an object of the first class. In that case the specified user action is to drag the object across the screen and drop it onto an intermediary object. This feature provides greater flexibility for a user to bypass elements in a process as required.

In addition, in the embodiment to be described an intermediary object is configured so that an object can be removed therefrom by a user. This feature allows a user to remove an object from an intermediary object in order to transfer it somewhere else. In practice, this may be achieved by the user clicking on the object and dragging it off the intermediary object.

Preferably, the system comprises means for animating the display of the progress of transferring an object via an intermediary object. In the embodiment to be described an intermediary object is configured for holding a plurality of objects at one time.

Preferably, the system comprises a plurality of intermediary objects having standardised behaviour. In this way, the intermediary objects form building blocks for interconnecting other components in a process modelled by the system.

In the embodiment to be described, the system is configured so that the transfer of objects via an intermediary object proceeds as a background task whilst other operations are being performed. This feature exploits the facilities available in known object-based and windows packages.

In a system according to the present invention, preferably one or more classes of object is designed to support at least one generic semantic interface enabling persistent coupling between two objects which both support the same generic semantic interface. By 'persistent' is meant that the coupling survives the closing down of a user session. This feature has the advantage of reducing the interdependence of objects in the system ie. objects need less information about other objects' capabilities, they just need to know whether another object supports the relevant generic semantic interface. In the embodiment to be described, the capacity for a persistent coupling is represented to a user by a connector associated with an object as visually displayed. In particular, input socket and output plug connectors will be described.

Brief Description of the Drawings

A specific embodiment of the present invention will now be described, by way of example, with reference to the accompanying drawings of which:

Figure 1 is a diagram showing the software components of a system according to the present invention;

Figure 2 shows an example presentation of a configuration of system objects;

Figure 3 is a diagram showing the ownership links for the objects of Figure 2;

Figure 4 shows a Pipe Component displayed at an angle;

Figure 5 shows a Mobile Object offset from a Pipe Component;

Figures 6-48 show screens in a user session.

System Components

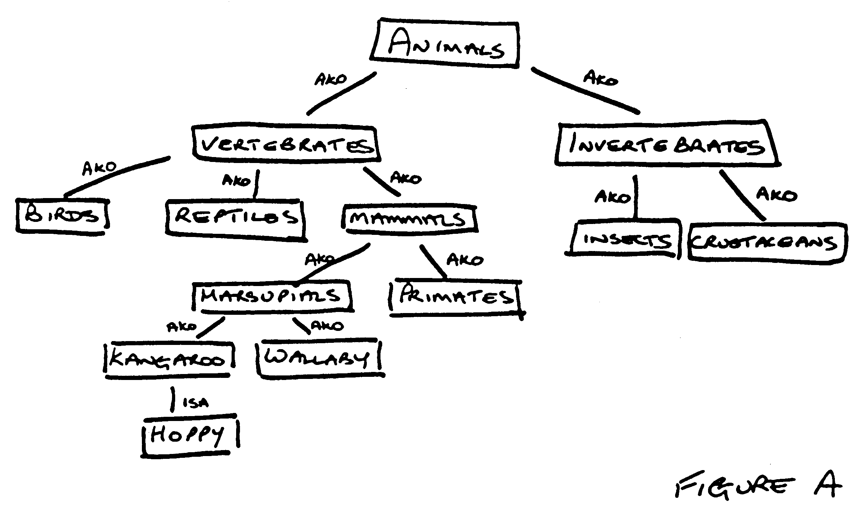

Figure 1 shows the software components in a distributed object based system 10 according to the present invention. It should be noted that the present invention is also applicable to standalone systems. The system 10 may run on networked personal computers each of which is provided with a hard disc, a flexible disc and a networking card. Each personal computer is loaded with the following software:

operating system software 12, MSDOS in this example;

windows interface software 14, Microsoft Windows in this example;

local area networking software 16;

distributed message switching software 18;

an object based software environment 20, Hewlett-Packard NewWave in this example;

system objects 24.

System Objects

There are three classes of system objects 24, namely:

"Configurer Objects"

"Mobile Objects"

"Activity Objects"

Each of these three main classes of object will be described in detail. Within these classes are sub-classes of object having predetermined functionality and, of course, in use specific instances of these types of object are created. First, in order to provide context for these descriptions, reference will be made to Figure 2 which represents an example of a window seen by a user using a system according to the present invention.

A window 26 of well-known type appearing on the user interface of a computer system comprises a border 28, a title bar 30, a menu bar 32 and horizontal and vertical scroll bars 34 and 36 respectively. Mobile Objects are represented by a simple icon. The user can use a mouse input device to select, drag, and drop the icons representing Mobile Objects within the window 26. Activity Objects are also represented by an icon in the window 26. The user can also use the mouse to select and drag Activity Objects within the window 26. In the window 26 are displayed system objects in the form of icons as follows:

Activity Objects: "Generator" 38

"Folder" 40

"Watcher" 42

"Actioner" 44

Mobile Objects: "Form A" 46

"Form B" 48

From the user viewpoint, there are two types of system object - 'static' objects (referred to here as 'Activity Objects') and 'mobile' objects (referred to here as 'Mobile Objects'). Mobile Objects are generally passive carriers of data, such as documents or forms. Mobile Objects may have data contents that are accessible and/or modifiable by other objects. Activity Objects are used to store and route Mobile Objects, and sometimes to access and manipulate the data they carry. It is by establishing persistent relationships between Activity Objects that support for a specific task can be built.

In this system persistent relationships between objects are presented and manipulated by a special object called a Configurer Object. Figure 2 shows the appearance of an open Configurer Object, displaying the configuration it contains.

Hence sub-classes of Activity Objects are Generator, Folder, Watcher and Actioner objects, and specific instances of these are shown in Figure 2.

Interconnecting the Generator 38 and Folder 40 is a first "Pipe Component" 50. A second Pipe Component 51 interconnects the Watcher 42 and the Actioner 44. The Pipe Components are not separate objects but are each part of a Configurer Object.

Pipe Components must, however, have a more complex display within the configurer window. A Pipe Component is shown as a line with an input socket 52 at one end, and an output plug 53 at the other. Mobile Objects in the Pipe Component's queue are displayed in order along the length of the Pipe Component, starting with the object at the head of the queue next to the output plug 53. The Pipe Component normally displays the Mobile Objects so that they do not overlap each other, but are just butting up to their neighbours. However, if this is not possible due to the large number of Mobile Objects on the Pipe Component, the Mobile Objects are displayed overlapping.

As Mobile Objects enter the Pipe Component, and are removed from it, the Pipe Component animates the display of these Objects. When a Mobile Object lands on the Pipe Component it starts moving towards the output end of the Pipe Component. When a Mobile Object reaches the end of the Pipe Component, it can be handed on to an Activity Object connected to the output plug 53 of the Pipe Component. If the Activity Object is refusing to accept Mobile Objects, or there is no Activity Object connected, the Mobile Objects are queued up at the end of the Pipe Component. The head of the queue is at the output plug 53 of the Pipe Component. As more Mobile Objects arrive, and travel down the Pipe Component, they stop when they reach the tail of the queue. As Mobile Objects are removed from the queue at the end of the Pipe Component, the remaining Objects in the queue are shuffled up to fill up the gap.

For a Pipe Component within the window 26, the user is able to:

1) Select the Pipe Component
2) Drag the whole Pipe Component
3) Drag the plug or socket at the end of a Pipe Component. The other end stays where it is, and the body of the Pipe Component stretches between the two. If any Mobile Objects are in the queue, they also move with the body of the Pipe Component.
4) Select a Mobile Object in the Pipe Component and drag it out of the Pipe Component's queue.
5) Drag a Mobile Object over a Pipe Component, and drop it onto the Pipe Component.

In this example, the system objects have been used to provide a network of Activity Objects interconnected by Pipe Components along which Mobile Components can be transferred. The system could, for example, be one for processing stationery orders in a large organisation. Form A could be a request for more memo paper and Form B could be an order for paper to be sent to an external supplier.

The inter-object messages referred to in the following description are detailed in Appendix A. Appendix A refers to the HIWORD and LOWORD of parts of a message. In the present embodiment a single word (16 bits) and a double word (32bits) is available for specifying the message parameters. A double word is available for specifying the return value of the message. The windowing software permits more than one message to be accommodated in this double word and the LOWORD (lowest 16 bits) or HIWORD (highest 16 bits) can be retrieved selectively.

## Configurer Objects

Configurer Objects are used to construct a processing system to suit user requirements. They are part of the infrastructure of system objects and have standardised behaviour. Configurer Objects are container objects which each have the capacity for containing a plurality of Pipe Components, Mobile Objects and Activity Objects. In this embodiment, the configurer objects are written in C++ using an object-oriented design. Each of the Pipe Components is a C++ object and each of the Mobile Objects and Activity Objects are encapsulated as C++ objects. A NewWave object is often written as several C++ objects. In this embodiment Pipe Components are examples of C++ objects forming part of a Configurer Object, which is a NewWave object. To facilitate processing, representations of other NewWave objects, eg. Mobile Objects and Activity Objects, are also included in Configurer Objects in the form of C++ objects. Such C++ objects form the focal point for communications between the Configurer Object and the NewWave object which they represent. The C++ objects store certain data relating to their states, including a unique object identifier, bounding box details and a current selection flag. The bounding box information is stored as:

windows RECT = { top,left;bottom,right}

where the four entries in the list are integers and define the lines forming a rectangle.

The bounding box information is used when repainting the screen to decide which objects need repainting and for approximate 'hit testing' - deciding which objects may be the target of user actions, such as mouse clicks. The current selection flag is set for those objects which are currently selected by a user.

Figure 3 shows the ownership links for the objects displayed in Figure 2. The Configurer Object maintains a list indicating the Z-order in which its child objects are to be displayed ie. where two objects would overlap on the screen, which one appears above the other. Objects at the back of the list are of lower Z order than those at the front. When an object is'dragged' on the screen by a user it is removed from its previous place in the list and inserted at the front of the list ie. it rises above all of the other items displayed on the screen.

It is the responsibility of each of the presentation parts of the various objects to:

i) maintain their display within the Configurer Object window;

ii) provide hit-testing for user actions in the Configurer Object window so as to locate the target of user actions;

iii) implement the consequences from the display viewpoint of user actions eg. when an object icon is dragged across the screen or when one object icon is dropped on to another.

iv) update the underlying semantic object.

System Objects in the system interact with each other via generic semantic interfaces.

A generic interface is one that is not specific to one particular kind of system object. The use of generic interfaces is important to enable interworking between system objects. It would be impractical to require each system object to understand all the specific interfaces of all the other system objects with which it may be required to interact.

A semantic interface is one that concerns the attributes which are important to the functionality of the system object offering the interface. This distinguishes a semantic interface from, for example, a presentation interface. The latter is concerned with the appearance of the system object to a user, and may introduce attributes (such as colour) which ease interpretation by people, but which are strictly unnecessary to the correct functioning of the system object.

The generic semantic interface provides a well-defined mechanism whereby one system object can directly interact with another. A single system object may offer several such interfaces, with different functionalities.

Each generic semantic interface is implemented as a set of calls that may be invoked on system objects which support the interface. A generic interface may be defined so that it allows the maintenance of a two-way relationship between a system object and one or more other system objects and this requires that all of the relevant system objects know each others identity. Alternatively, a generic semantic interface may be defined so that it allows a system object to interact with another system object without the latter object needing to know the identity of the former in advance. Such interfaces support transient interactions between system objects.

In this embodiment, for one system object to be visually connected to another in a task configuration, as shown for example in Figure 2, both of the system objects must support the 'configuration interface', which will now be described.

Each Configurer Object has a plurality of generic semantic interfaces for interacting with other system objects. Certain ones of these interfaces enable interconnection between system objects and, for the purposes of this description, these interfaces will be termed 'Connectors'. Each Connector is attached to a parent object and has a defined set of messages which can be sent via that Connector to another system object. Each Connector also has associated with it a screen position. The shape of Connectors as displayed to a user is chosen so as to indicate the relevant connection capabilities. Connectors provide persistent couplings between system objects to establish the context for communication. The input socket and output plug at the ends of each Pipe Component are examples of Connectors. The Configurer Object maintains information about its Connectors, including:

- Connector identity number;

- the identity of the object or part-object of which the Connector is a part;
- the x and y screen positions of the Connector;

In this embodiment, Connectors are implemented as C++ objects which are children of a system object eg. an Activity Object. To the user, the Connector is portrayed as a part of the relevant System Object.

There is a C++ object class called 'Connector' which provides facilities relating to Connectors for all the system objects:

1) - it can draw any one of a predefined set of Connector shapes in a variety of orientations (left, right, up or down) in a window. There are plug and socket Connector shapes for each type of interface enabling interconnection which is supported by the Configurer object. The plug and socket Connectors on Pipe Components represent the interfaces for passing Mobile Objects into and out of Pipe Components;

2) - it maintains information about each instance of Connector that is part of a Pipe Component or an Activity Object. This information includes the screen position of each Connector, its orientation and the inter-object connections with which it is currently involved.

If Connectors are dragged across the screen by a user, the parent system object constrains the movement of the Connector so as to travel around the border of the icon of the parent system object. If the parent system object is dragged, it moves its Connectors accordingly.

Pipe Components

Pipe Components form part of Configurer Objects in this embodiment and have standardised behaviour. Each Pipe Component forms part of the same NewWave object as an instance of a Configurer Object. This approach is expedient since a Pipe Component must represent a relatively complex interface in the window of the relevant Configurer Object. One way of implementing Pipe Components is to use objects provided by an object-based programming language such as C++. In this embodiment, there are four program elements involved in implementing Pipe Components:

1) the top-level NewWave and Windows message dispatcher
2) the z-order display list of the relevant Configurer Object
3) the code for the Pipe Component itself
4) the Connector code module referred to above.

The top level dispatcher receives Windows and NewWave message via the Microsoft Windows messaging mechanism. Some of these messages are destined for the Configurer Object, but other message are destined for Pipe Components contained within the Configurer Object. Although Pipe Components and Configurer Objects are implemented in the same program, the messages are not defined assuming that. All external messages to Pipe Components are in the context of a particular Connector of a Pipe Component. The Connectors of a Pipe Component are identified by a number as described previously. By allocating different numbers for the Connectors provided by a Configurer Object and by the Pipe Components within it, it is possible to distinguish which messages should go where. Pipe Components will now be described in detail.

At the highest level, Pipe Components are the means for transferring Mobile Objects between Activity Objects.

Mobile Objects can arrive in a Pipe Component via its input socket or they can be dropped directly onto a Pipe Component by a user. A Pipe Component can hold more than one Mobile Object at any one time.

Once a Pipe Component has been given a Mobile Object it must place it in an ordered queue with all the other Mobile Objects it has been given so far. Mobile Objects arriving in the Pipe Component are put at the end of the queue. The queue of Mobile Objects is bounded. If the queue is full, a Pipe Component can refuse to take any more Mobile Objects.

There are two ways in which Mobile Objects can leave a Pipe Component. The first is if a user drags a specific Mobile Object out of the Pipe Component. The second is when a Mobile Object is taken from the head of the queue, and given to the Activity Object attached to the Pipe Component's output plug.

If there is no Activity Object currently attached to the Pipe Component's output plug, Mobile Objects can only be removed from the Pipe Component queue by the user. Even if an Activity Object is connected to a Pipe output plug, it can refuse to take Mobile Objects from the Pipe Component.

Each Pipe Component maintains the following state:

1) Two Connector instances (which includes the position of the Connectors in the window).
2) Bounding box information. The size and position of the bounding box is derived from the postion of the Connectors, which define the diagonally opposite corners of the box. If the Pipe Component is horizontal the bounding box is treated as of negligible width.

3) A list of references to Mobile Objects that are currently on the Pipe Component. The list includes those Mobile Objects that are moving towards the ends of the Pipe Component (the moving queue) and also those Mobile Objects that have stopped moving, and are sitting at the end of the Pipe Component (called the end-queue). Each Mobile Object on the Pipe Component appears only once in the list.

4) The length of the Pipe Component occupied by the icons of the Mobile Objects in the end-queue.

5) The state of any transaction in progress for handing over the Mobile Object at the head of the queue to the Activity Object attached to the output plug of the Pipe Component.

6) The maximum number of Mobile Objects that can be on the Pipe Component. The number can either explicitly be specified as part of the Pipe Component's configuration, or as a percentage of the length of the Pipe Component divided by the size of the icons of the Mobile Objects on it.

7) For each Mobile Object, a reference to that Mobile Object and a record of the distance it has so far travelled along the Pipe Component.

In order to re-display itself, the Pipe Component:

1) Finds out where its Connectors are - and draws a line between their centres.

2) Requests each Connector to draw itself.

3) For each Mobile Object on the Pipe Component, it uses the Mobile Object's distance along the Pipe Component to work out where to display it. A Mobile Object is displayed by updating the origin of it's bounding box, and asking the presentation part of the Mobile Object to re-display itself.

In order to present and manipulate task configurations, objects must provide information about the interfaces they support and the specific connection points that will be visible to the user. They also need to offer details of the inter-object relationships in which they are currently involved.

The "configuration interface" allows the other interfaces which an object supports to be identified, and allows inter-object relationships to be assessed and changed. All classes of static objects in this embodiment support this interface.

The set of messages designed to support configuration are:

| | |
|---|---|
| CF-CONNECTOR-INFO | request general Connector information |
| CF-CONNECTOR-CHANGED | indicate a Connector has changed |
| CF-CONNECTOR-STATUS | request current state of Connector |
| CF-ENUM-CONNECTORS | request a list of Connectors from an object |
| CF-ENUM-INTERFACES | request a list of interfaces from an object |
| CF-UNPLUGGED-FROM | advise object of a lost connection |
| CF-PLUGGED-TO | advise object of a new connection |
| CF-CONNECTION-UPDATE | advise an object that its set of existing connections have been changed |
| CF-CONNECTOR-ADDED | advise Configurer Object in which an object appears that that object has established a new connection |
| CF-CONNECTOR-REMOVED | advise Configurer Objects in which an object appears that one of its existing connections has been removed |
| CF-DROP-ALL-CONNECTIONS | advise an object that its set of existing connections are to be rendered invalid |

When configuring the system, user actions cause 'plug' and 'un-plug' messages to be sent to Pipe Components.

The Pipe Component has to respond to seven types of external stimuli:

1) An idle-timer tick

2) A user dragging the Pipe Component, or one of the Pipe Component's Connectors

3) A user dragging a Mobile Object off the Pipe Component

4) A user dropping a Mobile Object onto the Pipe Component

5) An Activity Object connected to the input socket attempting to deliver a Mobile Object

6) An Activity Object connected to the output plug being able to accept a Mobile Object from the head of the queue

7) A Connector being plugged or un-plugged.

In order to present the illusion of animation, the Pipe Component performs one step of the animation of Mobile Objects in the moving queue every time it gets notified of an idle timer-tick.

The idle timer-tick is generated at pre-set intervals only when the Configurer Object is waiting for input. This means that the animations are essentially a low-priority background task that occur when the user is not doing anything, and which allow other applications to progress.

The idle-timer tick is processed by moving each Mobile Object in the moving queue towards the end of the Pipe Component by a preset step value. The step value is set up as a configuration value of the main program. The step value gives the distance in screen units, that each Mobile Object should be moved down the Pipe Component. When a Pipe Component is inclined at an angle on the screen, then this is taken into account by moving a Mobile Object a horizontal distance dx and a vertical distance dy for each idle-timer tick as follows.

Figure 4 illustrates a Pipe Component displayed at an angle on the screen. If S is the present step value, the distances dx and dy are calculated as follows:

$$dx = \frac{x * s}{h}$$

$$dy = \frac{y * s}{h}$$

where x, y and h are the lengths of a right angled triangle defined by the Pipe Component as shown in Figure 4.

The Mobile Objects in the moving queue are processed starting with the one at the head of the queue and working down toward the tail.

The pseudo-code for moving a Mobile Object one animation step along a Pipe Component is:

```
FOR each Mobile Object on the Pipe Component starting at the head (output)

        calculate the prospective new position of the Mobile Object when advanced by
        present step value S
        IF object at head of queue then
                IF object at new position intersects head Connector then
                        Do not move
                ELSE
                        move S ie. move dx, dy
                END IF
        ELSE
                IF object at new position intersects next object toward end of queue
                THEN
                        DO not move

                ELSE
                        move S
                END IF
        END IF
END FOR
```

User actions result in 'plug' and 'unplug' messages being sent to Pipe Components.

A CF-PLUGGED-TO message gives the indentifiers of the Pipe Component being connected to and of the relevant Connectors on the Pipe Component and the object being connected to it. The object will usually be an Activity Object but it is also possible to interconnect two Pipe Components. A Pipe Component responds to a CF-PLUGGED-TO message by:

1) Checking whether its relevant Connector exists and is free and, if so, returning TRUE to the message, otherwise returning FALSE;

2) Recording the connection details in the appropriate Connector instance information ie. the identity of both the object being connected to and of the relevant Connector of that object;

3) Trying to send a Mobile Object to the connected object if the connection has been made to the output plug of the Pipe Component and there is at least one Mobile Object in the Pipe Component.

A CF-UNPLUGGED-FROM message gives the same information as a CF-PLUGGED-TO message. A Pipe Component responds to a CF-UNPLUGGED-FROM message by:

1) Checking whether its relevant Connector is presently plugged into the specified Connector of the object sending the message and, if not, returning FALSE;

2) Checking whether it is currently participating in a transaction with the object to which it is connected and, if so, returning FALSE;

3) Updating the Connector instance information by marking the Connector as being free.

4) If the input socket of the Pipe Component is being unplugged and the socket has been offered a Mobile Object, removing that fact from the state of the Pipe Component.

5) Returning TRUE to the message.

A whole Pipe Component is dragged around the window by the user pressing the mouse button down when the cursor is positioned over the main body of the Pipe Component, but not over any of the Mobile Objects, and then moving the mouse while the button is held down. The drag ends when the mouse button is released.

The drag of the whole Pipe Component is handled by:

1) Calculating the offset between the origin of the Pipe Component's bounding box and the position of the cursor when the mouse button was pressed down. This offset is applied to subsequent coordinates of the mouse cursor when the user moves the mouse to drag the Pipe Component;

2) Unplugging the Pipe Component's input socket and output plug from whatever they are currently connected to. This is done by sending a CF__UNPLUGGED-FROM message to the Pipe Component and to any Activity Objects to which it is currently connected;

3) Hiding all of the Mobile Objects on the Pipe Component while the Pipe Component is being dragged;

Every time the user moves the mouse cursor whilst holding the mouse button down:

4) Using the current mouse position and the offset calculated at the start to adjust the origin of the Pipe Component's bounding box and the position of the Connectors;

5) Re-displaying the Pipe Component without the Mobile Objects.

Once the user has released the mouse button:

6) Using the hit test routine to see if the output plug is over a compatible input socket, or if the input socket is over a compatible output plug (a plug/socket combination is compatible if they have the same shape, ie. they represent the same interface) and;

i) if the output plug is over a compatible input socket, plugging them together;

ii) if the input socket is over a compatible output plug, plugging them together.

Plugging two Connectors together is done by sending a CF-PLUGGED-TO message to both parents of the Connectors.

7) Re-displaying the Mobile Objects along the length of the Pipe Component.

Dragging the Pipe Component's Connector works in a similar way. The user starts the drag by positioning the mouse cursor over a Pipe's Connector, and depressing the mouse button. The Connector is moved by holding the mouse button down, and moving the mouse cursor. The drag is ended by releasing the button.

The drag of a Connector is handled by:

1) Calculating the offset between the origin of the Connector, and the position of the cursor when the mouse button was pressed down. This offset is applied to subsequent coordinates of the mouse cursor when the user moves the mouse to drag the Connector;

2) Unplugging the Connector from whatever it is curtently connected to. This is done by sending a CF-UNPLUGGED-FROM message to the Connector to which the Pipe Component is connected and to the parent of that Connector;

3) Displaying the movement of the Pipe Component and all of the Mobile Objects on the Pipe Component while the Connector is being dragged;

Every time the user moves the mouse cursor whilst holding the mouse button down:

4) Using the current mouse position and the offset calculated at the start to adjust the origin of the Connector;

5) Extending or contracting the bounding box of the Pipe Component to contain both its input and output Connectors;

Once the user has released the mouse button:

6) Using the hit test routine to see if the Connector is over another compatible Connector, and if it is, plugging them together. This is done by sending a CF-PLUGGED-TO message to both parents of the Connectors.

7) Displaying the Mobile Objects along the length of the Pipe Component according to the following algorithm:

IF new Pipe Component length > from the start of the Mobile Object nearest the tail of the queue to the end of the Mobile Object at the head of the queue.

THEN preserve the relative positions of the Mobile Objects on the Pipe Component

ELSE position the Mobile Objects so that they are equally spaced along the Pipe Component, with overlap if necessary.

The user can add Mobile Objects to a Pipe Component by dragging them over the Pipe Component and dropping them. The user can also remove Mobile Objects by dragging them off the Pipe Component.

A user starts dragging a Mobile Object by moving the mouse cursor over the Mobile Object, and depressing the mouse button. The user then keeps holding the button down, and moves the mouse cursor to where the user wants the Mobile Object to be placed. The user then releases the mouse button.

If the user starts to drag a Mobile Object that is on a Pipe Component, the Mobile Object is removed from the Pipe Component. This is done by removing the Mobile Object from whatever queue it is in. If the Mobile Object was in the end-queue, Mobile Objects between it and the tail of the end-queue are placed on the moving queue. Provided that the properties of the Mobile Objects have been preserved (i.e. the 'length used' property), the next animation step will shuffle up the Mobile Objects and re-build the end queue.

Once the user stops dragging the Mobile Object and releases the mouse button, the Mobile Object is considered to be dropped. A hit-test procedure is then used to find if there is any other Object under the Mobile Object. If it finds a Pipe Component under the Mobile Object, then it asks the Pipe Component to insert the Mobile Object.

To insert a Mobile Object into a Pipe Component the Pipe Component must:

1) Find out where the Mobile Object is along the Pipe Component. This is done by working out the nearest point on the Pipe Component to the centre of the icon of the Mobile Object. This is done by using vector analysis to project the centre of the Mobile Object onto the closent point on the Pipe Component as follows:

if (LX, LY) represents the end point of the Pipe Component relative to the start point (i.e. (0,0)) and (PX,PY) represents the centre of the Mobile Object relative to that start point, then the distance along the Pipe Component to the closest point to (PX,PY) is:

$$\sqrt{(LX^2 + LY^2)} * \left[ 1 - \left( \frac{PX * LX + PY * LY}{LX + LY} \right) \right]$$

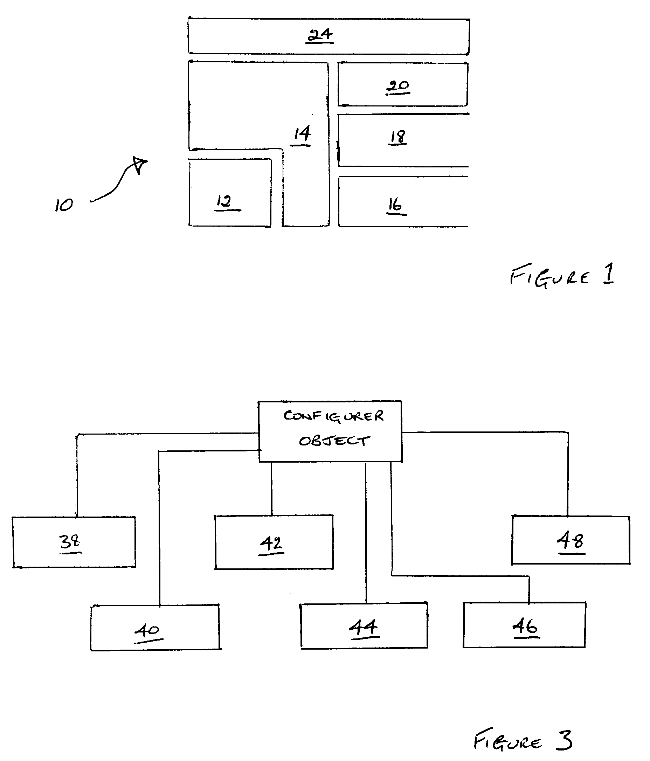

Figure 5 shows the lengths used in this calculation.

2) Search the moving and end queues to find where to insert the Pipe Component using the 'length used' property of the Mobile Object. If the Mobile Object being inserted overlaps with one which is closer to the end of the Pipe Component, then the inserted Mobile Object is moved back towards the start of the Pipe Component to make it fit next to the Mobile Object closer to the end of the Pipe Component. If the Mobile Object being inserted overlaps with one which is closer to the start of the Pipe Component, then that Mobile Object is moved back to fit next to the Mobile Object being inserted. Any more overlaps caused by this are fixed by shuffling Mobile Objects back towards the start of the Pipe Component.

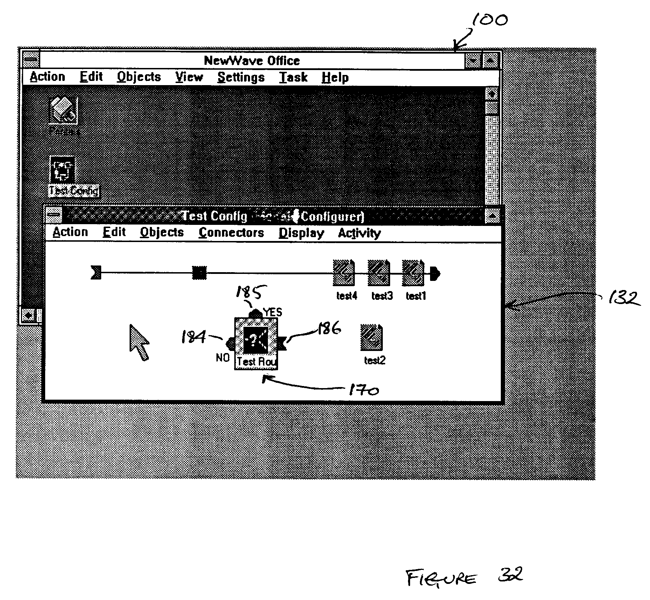

Fixing overlaps is somewhat complicated by the fact that the Pipe Component can have more Mobile Objects on it than can be displayed without overlaps. Overlaps are treated by giving each icon (except for the icon at the head of the queue) a fixed amount of space. The icons are displayed with the icon at the head of the end-queue being "highest", down to the icon at the tail of moving-queue being "lowest". The body of the Pipe Component is drawn below all of the icons (as shown in Figure 22).

The amount of space allocated to each icon (apart from the last one) is calculated by taking the length of the Pipe Component body, subtracting the width of the last icon, and by dividing the result by the number of icons in the Pipe Component minus one (i.e. (LineLength-iconWidth(icon at head of end-queue))/-(nIcons-1)).

A subsidiary benefit of Pipe Components is that they provide a buffer to hold Mobile Objects being transferred between two Activity Objects. Without this buffering effect eg. if Mobile Objects need to be transferred between two directly connected Activity Objects, such as the Watcher 42 and the Folder 40 in Figure 2, hold ups can occur as traffic increases.

Activity Objects

Activity Objects are for storing and forwarding Mobile Objects and for accessing and processing data held by Mobile Objects. Activity Objects provide the 'intelligence' of the system - it is their behaviour which characterises the system, in contrast to Configurer Objects and Pipe Components which have standardised behaviour.

Activity Objects support a data access interface which is one of the generic semantic interfaces of the system referred to earlier. The data access interface provides a generic way in which the internal data of an object may be accessed, and possibly changed, in a controlled manner. The data access interface allows selected data elements (fields) within an object to be accessed, and possibly changed. For example, it provides access to fields in a Mobile Object representing a form. It requires a way of identifying the data elements.

Activity Objects are able to send the following messages concerning data access to Mobile Objects which have been transferred to them:

DA-ENUM-FIELDS      request a list of accessible data items
DA-FIND-FIELDS      request identity of a data item
DA-GET-FIELD        request contents of a data item
DA-GET-LABEL        request a data item's label
DA-SET-FIELD        request new contents for a data item
DA-SET-LABEL        request new value for a data item's label

An Activity Object may query or change the content of any accessible Field at any time through the Data Access messages. These allow not only the Field content to be manipulated but also the Field's textual label. No record is maintained of a data access transaction once it has completed i.e. it is a transient process.

One category of Activity Object is a 'Watcher Object' (e.g. item 42 in Figure 2). Watcher Objects are able to be coupled directly to other Activity Objects and are programmed to prompt a predetermined course of action when a specified Mobile Object arrives at the relevant Activity Object or when a particular condition is reached. In Figure 2 for example, the Watcher 42 is programmed to initiate an order for more stationery from an external supplier when supplies get sufficiently low.

A container/Watcher Object generic semantic interface allows monitoring of the contents of the container object. Messages supporting this interface are:

CW-ATTACH-WATCHER      request Activity Object accepts new Watcher Object
CW-CHANGED-CONTENTS    notify a Watcher Object that a Mobile Object has changed
CW-DETACH-WATCHER      request Activity Object releases Watcher Object
CW-INSERTED-CHILD      notify a Watcher Object of the arrival of a Mobile Object
CW-REMOVED-CHILD       notify a Watcher Object of the departure of a Mobile Object

Watcher Objects are a good example of how functionality is packaged into a sub-class of object when more than simple passing of Mobile Objects between objects is required. In Figure 2, Folder 40 needs to support a container/Watcher interface but does not need to know what a Watcher 42 which is connected to it is monitoring. All Folder 40 does is inform Watcher 42 when anything changes using the appropriate one of the set of messages given above. Likewise, Watcher 42 does not need to know the function of Folder 40 in the system but simply checks messages sent to it by Folder 40 according to criteria programmed into the Watcher 42 and acts accordingly eg. by removing a certain Mobile Object that has arrived in the Folder 40.

Different types of Activity and Watcher objects can be interconnected according to user requirements.

Another generic semantic interface allows the monitoring of a single object to detect whether a predetermined change in the state of that object occurs. This interface is supported by Activity Objects and Mobile Objects and can be used in the context of a coupling between a Watcher Object and another Activity Object. The messages defining this interface are:

DC__CHANGED__DATA      notify a Watcher Object that a data item has changed

DC__COUPLE__DATA       request initiation of a data link
DC__UNCOUPLE__DATA     request termination of a data link

The container contents interface allows access to the contents of a container object. For example it allows a Watcher Object to check the contents of an Activity Object representing an office in-tray and to remove a Mobile Object from the in-tray if it matches its pre-set criteria.

The set of messages designed to support this interface are:

CC-ENUM-CHILDREN       request a list of child objects
CC-INSERT-CHILD        request an object accepts a new child
CC-REMOVE-CHILD        request an object gives up a child

These messages can be used in moving Mobile Objects through a direct connection between two Activity Objects, such as a Folder Object and a Watcher Object attached thereto.

The object passing interface allows Mobile Objects to be moved from one object to another. For example Activity Objects use a object-passing message interface to request a Pipe Component to accept a Mobile Object. Pipe Components use the same message interface for passing Mobile Objects to an Activity Object. The relevant set of messages is:

CP-ABORT-MOBILE        abort prepared Mobile Object
CP-ARRIVE-MOBILE       indicate availability of Mobile Object
CP-ASK-MOBILE          request a Mobile Object's Identifier
CP-COMMIT-MOBILE       commit prepared Mobile Object transaction
CP-OUTCOME-MOBILE      query status of a transaction
CP-PREPARE-MOBILE      prepare a Mobile Object transaction
CP-REMOVED-MOBILE      indicate removal of a Mobile Object

The object passing messages are designed to assist a static object that may need to coordinate multiple inputs or outputs by providing a simple two phase commitment protocol, using unique transaction identifiers.

The handover of a Mobile Object to a Pipe Component proceeds as follows:

1) The Activity Object starts off by sending the Pipe Component a CP-ARRIVE-MOBILE message. This message gives the Pipe Component the identifier of a Mobile Object that the Activity Object wants it to accept.

2) The Pipe Component can then check if it can accept the Mobile Object. Since it has the identifier of the Mobile Object it can check the size of its icon if it needs to eg. if the displayed length of the Pipe Component is used to limit the number of Mobile Objects that can fit on it.

3) If the Pipe Component cannot accept the Mobile Object, it should remember that it has been offered one. If the Pipe Component finds out at a later stage that it can accept another Mobile Object, it can resume with the next step of this process. The Activity Object can withdraw the offer of a Mobile Object at any stage before the handover transaction (see points 4 to 6) by sending a CP-REMOVED-MOBILE message.

4) When the Pipe Component does want to accept the Mobile Object, it must start a transaction to retrieve the Mobile Object. Since a Pipe Component only has one input Connector, it does not need to implement a 'proper' transaction ie. one as complex as one required when more than one Pipe Component is transferring a Mobile Object to an Activity Object with a plurality of input Connectors. The protocol, however, is defined in terms of a transaction, but the Pipe Component just needs to fill in enough dummy values to make the Activity Object think it is involved in a proper transaction (the Pipe Component is the transaction controller). The transaction is started by sending a CP-PREPARE-MOBILE message to the Activity Object. The message contains a dummy transaction identifier and the identifier of the Mobile Object in question.

5) The Activity Object returns a result from the CP-PREPARE-MOBILE message indicating whether it has been able to hand over the Mobile Object. One reason why the Activity Object cannot become so prepared is if the Mobile Object has been removed from the Activity Object by the user. If it has not become prepared, the Pipe Component goes back to waiting for a CP-ARRIVE-MOBILE. If the Activity Object has been able to prepare for the transaction, the Pipe Component moves on to the next step.

6) Once the Activity Object has indicated that it has prepared for the transaction, the Pipe Component can finish the transaction by sending a CP-COMMIT-MOBILE message to the Activity Object. After sending a positive repsonse to the prepare message, the Activity Object must not hand over the Mobile Object to any object other than the Pipe Component.

7) The Activity Object then no longer has any control over the Mobile Object and removes all references to it. The Pipe Component then controls the Mobile Object and inserts it into the appropriate queue.

The terms 'prepare' and 'commit' are terms which are well understood by the skilled person in the context of two phase commit protocols.

If a Pipe Component has an Activity Object connected to its output plug, and there is a Mobile Object in the Pipe Component's end-queue, then the Pipe Component can try passing the Mobile Object at the head of the end-queue to the Activity Object.

The Pipe Component uses the same component passing protocol that was used to pass Mobile Object to it from the Activity Object connected to is input socket, except this time the Pipe Component is sending the Mobile Object.

The transfer is handled as follows:

1) The Pipe Component starts off by sending the Activity Object a CP-ARRIVE-MOBILE message. This message gives the Activity Object the identifier of a Mobile Object that the Pipe Component wants it to accept.

2) The Activity Object can then check if it can accept the Mobile Object. Since it has the identifier of the Mobile Object it can look at the Mobile Object and its contents.

3) It could be some time before the Activity Object tries to get the Mobile Object. If the user removes the offered Mobile Object from the Pipe Component, the Pipe Component can withdraw the offer by sending a CP-REMOVED-MOBILE message, and offer the next Mobile Object at the head of the end-queue with a CP-ARRIVE-MOBILE message.

4) When the Activity Object wants to get the Mobile Object, it must start a transaction to retrieve the Mobile Object. Since an Activity Object can have many input Connectors, it might need to implement a proper transaction atomically to retrieve a set of Mobile Objects on different Pipe Components from its inputs as an indivisible process. The transaction is started by the Activity Object sending a CP-PREPARE-MOBILE message to the Pipe Components. The message contains a transaction identifier and the identifier of the Mobile Objects in question.

5) The Pipe Components prepare for the transaction by locking the Mobile Objects from any user actions. If the Pipe Components could lock the Mobile Objects, the Pipe Components return a positive result to the CP-PREPARE-MOBILE message (and the Activity Object can proceed with the transaction). If the Pipe Components cannot lock all of the Mobile Objects (e.g. the user had removed one), the relevant Pipe Component returns a negative result.

6) Once the Activity Object has prepared all the partners in the transaction, it can announce whether the transaction succeeded (i.e. all prepared successfully) or failed (at least one could not prepare). The Activity Object announces the outcome of a successful transaction by sending a CP-COMMIT-MOBILE message to every partner of the transaction. If the transaction has failed, the Activity Object aborts the transaction by sending a CP-ABORT-MOBILE message to every partner in the transaction.

7) When the Pipe Component gets a CP-COMMIT-MOBILE message it removes the Mobile Object from itself. The Pipe Component is re-displayed in the same way as when the user removes the Mobile Object which is then free for use by the Activity Object. If the Pipe Component gets a CP-ABORT-MOBILE, it unlocks the Mobile Object.

Full details of the generic semantic interfaces are given below.

CC__ENUM__CHILDREN

**Purpose**      This message is sent to a object to request a list of its objects.

**Parameters**   This message has no parameters.

**Return Value**   The LOWORD of the return value is set to a global handle to a data structure of type:

```
typedef          struct {
     WORD              children;
     OBJECTNAME        child[l];
} CHILDLIST;


typedef CHILDLIST  FAR  *LPCHILDLIST;
```

**children** is the number of children within this container.

**child** is the first element of a list of the children's PARAMETER scope names.

CC_INSERT_CHILD

**Purpose**     This message requests a container object to add a new child object to its set of children.

**Parameters**     The **IParam** of the message will be set to the PARAMETER scope name of the child object.

**Return Value**     The LOWORD of the return value will be set to TRUE if the container object accepts the child as its own, otherwise it should be set to FALSE. The HIWORD is not used and should be set to zero.

CC_REMOVE_CHILD

**Purpose**     This message requests a container object to remove a child object from its existing set of children.

**Parameters**     The **IParam** of the message will be set to the PARAMETER scope name of the child object to be removed.

**Return Value**     The LOWORD of the return value will be set to TRUE if the container object removes the child object, otherwise it should be set to FALSE. The HIWORD is not used and should be set to zero.

CF_CONNECTOR_INFO

**Purpose**     When a object is to be presented in a Configurer Object's display context the object must provide the Configurer Object with information about its potential connectors. This message is sent by the Configurer to request information on a per Connector basis.

**Parameters**     The LOWORD of **IParam** is set to **connectorId**. The HIWORD is not used and should be set to zero.

**Return Value**     The LOWORD of the return value contains a global handle to a structure defined as:

```
typedef struct {
    BOOL            isPlug;
    WORD            InterfaceId;
    WORD            connectorId;
    char            name [MAXCONNECTORNAME+1];
    }               CONNECTOR;

    typedef CONNECTORFAR *LPCONNECTOR;
```

**isPlug** indicates whether this particular connector accepts input or generates output.
**InterfaceId** describes the type of the connector.
**connectorId** is the local identifier of the connector
**name** user visible name of the connector

CF_CONNECTION_UPDATE

**Purpose**     This message is sent by a Configurer to inform a Object that its set of existing connections have been changed.

**Parameters**     The LOWORD of IParam is set to a global handle to a structure defined as:

15

```
typedef struct {
    PLUGSTRUCT          oldcxn ;
    PLUGSTRUCT          newcxn ;
} CONNECTIONUPDATE;

typedef CONNECTIONUPDATEFAR *LPCONNECTIONUPDATE;
```

**oldcxn** the old connection that no longer exists

**newcxn** the replacement connection.

**Return Value**   A value of TRUE is returned if the Object can successfully process its connections, otherwise a value of FALSE is returned.

CF_CONNECTOR_ADDED

**Purpose**   This message is sent by a Object to advise each of the Configurers it appears in that a new connection has been established.

**Parameters**   The LOWORD of lParam is set to a global handle to a structure defined as:

```
                    typedef struct {




    OBJECTNAME          object;
    CONNECTOR           connector ;
} CONNECTIONINFO;

typedef CONNECTIONINFO FAR *LPCONNECTIONINFO;
```

object is the PARAMETER scope name of the object with the newly established connector.

**connector** is a description of the new connector.

**Return Value**   A value of TRUE is returned if the Configurer successfully processed this message, otherwise a value of FALSE is returned.

CF_CONNECTOR_CHANGED

**Purpose**   This message is sent to all Configurers Objects who are "parents" of this object to advise them that one of its connections has changed in some unspecified way.

**Parameters**   The LOWORD of **lParam** is set to a global handle of a structure defined as:

```
            typedef struct {
                OBJECTNAME          configName;
                OBJECTNAME          objectName;
                WORD                connectorId;
            } CONNECTION;

            typedef CONNECTION    FAR *LPCONNECTION;
```

**configName** is the context within which this connection was defined.

**objectName** is the PARAMETER scope name of the object that is reporting a change

16

to one of its connectors.

**connectorId** is the object's local identifier for the connection.

The HIWORD is not used and should be set to zero.

**Return Value**     A return value is not defined for this message. The value should be set to Zero.

CF_CONNECTOR_REMOVED

**Purpose**     This message is sent by a Object to advise each of the Configurers it appears in that an existing connection has been removed.

**Parameters**     The LOWORD of IParam is set to a global handle to a structure defined as:

```
typedef struct {
    OBJECTNAME          object;
    CONNECTOR           connector ;
} CONNECTIONINFO;


typedef CONNECTIONINFOFAR *LPCONNECTIONINFO;
```

**object** is the PARAMETER scope name of the object with the removed connector.

**connector** is a description of the removed connector.

**Return Value**     A value of TRUE is returned if the Configurer successfully processed this message, otherwise a value of FALSE is returned.

CF_CONNECTOR_STATUS

**Purpose**     When a object is to be presented in a configurer window, the object must provide the configurer with information about its current connections. This message is sent to a compont by the configurer to request information on a per connector basis.

**Parameters**     The LOWORD of IParam is set to **ConnectorId**. The HIWORD is not used and should be set to zero.

**Return Value**     The LOWORD of the return value contains a global handle of a structure defined as:

```
typedef struct {
    OBJECTNAME          configName;
    OBJECTNAME          objectName;
    WORD                connectorId;
}  CONNECTION;


typedef CONNECTION   FAR *LPCONNECTION;
```

**configName** is the context within which this connection was defined

**objectName** is the PARAMETER scope name of the connected to object.

**connectorId**. is the object's local identifier for the connection.

The HIWORD is not used and should be set to zero.

CF_ENUM_CONNECTORS

**Purpose**     This message is sent to a object to solicit a list of its connectors.

**Parameters**     This message has no parameters.

**Return Value**     The LOWORD of the return value contains a global handle to a data structure defined as:

```
typedef struct    {
    WORD              connections;
    CONNECTION        connection[1];
{ CONNECTIONLIST;


typedef  CONNECTIONLISTFAR    *LPCONNECTIONLIST;
```

**connections** is the number of connectors supported by the object.
**connection** is an array of connection state structures (one per supported connector).

## CF_ENUM_INTERFACES

**Purpose**      This message is sent to a object to solicit a list of the interfaces it supports.
**Parameters**   This message has no parameters.
**Return Value** The LOWORD of the return value contains a global handle of a structure defined as:

```
typedef struct    {
    WORD              interfaces;
    WORD              interface[1];
{ INTERFACEIDLIST;


typedef  INTERFACEIDLISTFAR*LPINTERFACEIDLIST;
```

**interface** is the number of interfaces supported by the object.
**interface** is an array of integers, each of which is the unique identifier of a service interface provided by the object.

## CF_PLUGGED_TO

**Purpose**      This message is sent to a object to request it that it connects itself to another specified object.
**Parameters**   The LOWORD of **lParam** should contain a global handle to a data structure defined as:

```
typedef struct {
    OBJECTNAME        configurer;
    OBJECTNAME        connectedTo;
    WORD              yourConnectorId;
    WORD              otherConnectorId;
} PLUGSTRUCT;


typedef PLUGSTRUCT   FAR *LPPLUGSTRUCT;
```

configurer is the PARAMETER scope name of the configurer supervising the connection.
**connectedTo** is the PARAMETER scope name of the object the recipient is to connect to.
**yourConnectorId** is the identifier of the receiving object's connector.
**otherConnectorId** is the identifier of the other object's connector.
**Return Value** The LOWORD of the return value is set to TRUE if the connection was successfully accepted, otherwise it should be set to FALSE.

18

CF__DROP__ALL__CONNECTIONS

**Purpose**       This message is sent by a Configurer to inform an Object that its set of existing connections are to be rendered invalid.

**Parameters**    This message has no parameters.

**Return Value**  A value of TRUE is returned if the Object can successfully process this message, otherwise a value of FALSE is returned.


CF__UNPLUGGED__FROM

**Purpose**       This message is sent to a object to request that it should disconnect itself from the specified object.

**Parameters**    The LOWORD of **IParam** should contain a global handle to a data structure defined as:

```
typedef struct {
    OBJECTNAME          configurer;
    OBJECTNAME          connectedTo;
    WORD                yourConnctorId;
    WORD                otherConnectorId;
}  PLUGSTRUCT;

typedef PLUGSTRUCT    FAR *LPPLUGSTRUCT;
```

**configurer** is the PARAMETER scope name of the configurer supervising the connection.

**connectedTo** is the PARAMETER scope name of the object the recipient is to connect to.

**yourConnectorId** is the identifier of the receiving object's socket

**otherConnectorId** is the identifier of the other object's socket.

**Return Value**  The LOWORD of the return value is set to TRUE if the disconnection request was accepted, otherwise it should be set to FALSE.


CP__ABORT__MOBILE

**Purpose**       This message is sent to an object passing source to indicate that the mobile object it wishes to pass, which had previously been asked to prepare, will no longer be required.

**Parameters**    The LOWORD of **IParam** will contain the **transactionId** that was passed to the Pipe Component in the CP__PREPARE__MOBILE message.
The HIWORD is set to the **connectorId**.

**Return Value**  The LOWORD of the return value will be FALSE for failure and TRUE for success. The HIWORD is not used and will be Zero.


CP__ARRIVE__MOBILE

**Purpose**       The arrive message is sent by a object passing source, to one of its object accepting destinations, to indicate that a mobile object is available.

**Parameters**    The LOWORD of **IParam** contains a global handle to a structure defined like this:

```
                         typedef struct {
        OBJECTNAME        mobileObjectName;
        WORD              sourceConnectorId;
        WORD              yourConnectorId;
                    } MOBILEOBJECTSTRUCT;
```

typedef MOBILEOBJECTSTRUCT FAR
*LPMOBILEOBJECTSTRUCT

**mobileObjectName** is the PARAMETER scope name of the mobile object.
**sourceConnectorId** is the local reference to the object passing source.
**yourConnectorId** is the local reference to the object accepting destination.
The HIWORD is not used and should be set to zero.

**Return Value**    a return value for this message is not defined. The value should be set to zero.

CP_ASK_MOBILE

**Purpose**    This query message is sent to a object passing source to discover the name of the waiting mobile object, if any.

**Parameters**    The LOWORD of **lParam** is set to the **connectorId** associated with this object passing source. The HIWORD is not used and should be set to zero.

**Return Value**    The LOWORD of the return value should be set to a global handle to a structure defined like this:

```
            typedef struct {
                OBJECTNAME        mobileObjectName;
                WORD              sourceConnectorId;



            WORD              yourConnectorId;
        } MOBILEOBJECTSTRUCT;
```

typedef MOBILEOBJECTSTRUCT FAR
*LPMOBILEOBJECTSTRUCT

**mobileObjectName** is the PARAMETER name of the mobile object.
**sourceConnectorId** is the local reference to the object passing source.
**yourConnectorId** is the local reference to the object accepting destination.
The HIWORD is not used and should be set to zero.
If there is no waiting mobile object then this value should be set to null.

CP_COMMIT_MOBILE

**Purpose**    This message is sent to a object passing source to indicate that the previously prepared mobile object will be removed by the destination object. The object passing source is required to perform whatever actions are necessary to prevent the designated mobile object being interfered with.

**Parameters** The LOWORD of **lParam** will contain the **transactionId** that was passed to the Pipe Component CP__PREPARE__MOBILE message.

**Return Value** The LOWORD of the return value will be FALSE for failure and TRUE for success. The HIWORD is not used and should be set to zero.

CP__OUTCOME__MOBILE

**Purpose** This message is sent by a object passing source to a container to query the status of a transaction it is involved in. If the transaction had been CP__ABORT__MOBILEed then the Pipe Component must take whatever steps are required to indicate the mobile object is in a prepared state.

**Parameters** The LOWORD of **lParam** will contain the **transactionId** pertaining to this particular object pass.

**Return Value** The LOWORD of the return value will be:
FALSE if the transaction had been aborted
TRUE if the transaction is committed
The HIWORD is not used and should be set to zero.

CP__PREPARE__MOBILE

**Purpose** The prepare message is sent by a destination object to advise a object passing source that its most available mobile object will be required by the destination object as part of a larger transaction. This larger transaction is identified to the source as a transaction identifier. The source is required to indicate that this request can be successfully concluded.

**Parameters** The LOWORD of **lParam** contains a global handle to a structure defined like this:

```
typedef struct {
    MOBILEOBJECTSTRUCTmobileObject;
    WORD              transactionId;
}  TRANSACTIONSTRUCT;

typedef TRANSACTIONSTRUCT FAR *LPTRANSACTIONSTRUCT
```

**mobileObject** is a data structure containing the PARAMETER scope name of its most available mobile object and the source and destination local reference names.

**transactionId** is a reference to a larger transaction of which this request is an element.

**Return Value** The LOWORD of the return value will be TRUE if the mobile object is prepared or FALSE if it cannot be prepared. The **transactionId** should be placed in the HIWORD

CP__REMOVED__MOBILE

**Purpose** The arrive message is sent by a object passing source to a object accepting destination to indicate that a mobile object has been removed.

**Parameters** The LOWORD of **lParam** contains a global handle to a structure defined like this:

```
typedef struct {
        OBJECTNAME        mobileObjectName;
        WORD              sourceConnectorId;
        WORD              yourConnectorId;
} MOBILEOBJECTSTRUCT;
```

typedefMOBILEOBJECTSTRUCTFAR*LPMOBILEOBJECTST
RUCT

**mobileObjectName** is the PARAMETER name of the object removed from the head of the Pipe Component
**sourceConnectorId** is the local reference to the source object.
**yourConnectorId** is the local reference to the destination object.
The HIWORD is not used and should be set to zero.

**Return Value**   a return value for this message is not defined. The value should be set to zero.

CW__ATTACH__WATCHER

**Purpose**   This message is sent by a watcher to a container to request that it be registered as a referee.
**Parameters**   The LOWORD of **lParam** contains the name of the of the Watcher object requesting registration.
The HIWORD is not used and should be set to zero.
**Return Value**   The LOWORD of the return value is set to TRUE if the attach request was accepted, otherwise it should be set to FALSE.

CW__CHANGED__CONTENTS

**Purpose**   This message is sent by a container object to indicate that the state of one of its contained children has changed.
**Parameters**   The LOWORD of **lParam** contains a global handle to a structure of the form:

```
typedef struct {
    OBJECTNAME        containerObject;
    OBJECTNAME        watcherObject;
    OBJECTNAME        childObject;
    WORD              containerConnectorId;
    WORD              watcherConnectorId;
} CHILDWATCH;

typedef CHILDWATCH   FAR *LPCHILDWATCH;
```

**containerObject** is the PARAMETER scope name of the object containing the changed child.
**watcherObject** is the PARAMETER scope name of the object with an interest in the changed child.
**childObject** is the PARAMETER scope name of the child object that has changed.
**containerConnectorId** is the reference name of the container object.
**watcherConnectorId** is the reference name of the watcher object.
The HIWORD is not used and should be set to zero.

22

**Return Value**    A return value is not defined for this message and should be set to zero.

CW_DETACH_WATCHER

**Purpose**    This message is sent by a watcher to a container to request that it be removed as a referee.

**Parameters**    The LOWORD of **IParam** contains the name of the of the Watcher object requesting deregistration.
The HIWORD is not used and should be set to zero.

**Return Value**    The LOWORD of the return value is set to TRUE if the detach request was accepted, otherwise it should be set to FALSE.

CW_INSERTED_CHILD

**Purpose**    This message is sent by a container object to indicate that the state of one of its contained children has changed. In this case, it is that a new child object has arrived.

**Parameters**    The LOWORD of **IParam** contains a global handle to a structure of the form:

```
typedef struct {
    OBJECTNAME          containerObject;
    OBJECTNAME          watcherObject;
    OBJECTNAME          childObject;
    WORD                containerConnectorId;
    WORD                watcherConnectorId;
}   CHILDWATCH;

typedef CHILDWATCH    FAR *LPCHILDWATCH;
```

**containerObject** is the PARAMETER scope name of the object containing the changed child.
**watcherObject** is the PARAMETER scope name of the object with an interest in the changed child.
**childObject** is the PARAMETER scope name of the newly arrived child object.
**containerConnectorId** is the reference name of the container object.
**watcherConnectorId** is the reference name of the watcher object.
The HIWORD is not used and should be set to zero.

**Return Value**    A return value is not defined for this message and should be set to zero.

CW_REMOVED_CHILD

**Purpose**    This message is sent by a container object to indicate that the state of one of its contained children has changed. In this case, it is that an existing child object has been removed.

**Parameters**    The LOWORD of **IParam** contains a global handle to a structure of the form:

```
typedef struct {
    OBJECTNAME          containerObject;
    OBJECTNAME          watcherObject;
    OBJECTNAME          childObject;
    WORD                containerConnectorId;
    WORD                watcherConnectorId;
}   CHILDWATCH;

typedef CHILDWATCH    FAR *LPCHILDWATCH;
```

**containerObject** is the PARAMETER scope name of the object containing the changed child.

**watcherObject** is the PARAMETER scope name of the object with an interest in the changed child.

**childObject** is the PARAMETER scope name of the removed child object.

**containerConnectorId** is the reference name of the container object.

**watcherConnectorId** is the reference name of the watcher object.

The HIWORD is not used and should be set to zero.

**Return Value** A return value is not defined for this message and should be set to zero.

DA_ENUM_FIELDS

**Purpose** This message is sent to a data bearing object to solicit a list of its accessible data items (fields).

**Parameters** This message has no parameters.

**Return Value** The HIWORD of the return value is set to a global handle to a data structure of type:

```
typedef          struct {
                    WORD              fieldIds;
                    WORD              fieldId[1];
                 } FIELDLIST;


                 typedef FIELDLIST  FAR  *LPFIELDLIST;
```

**fieldIds** the number of accessible data items.

**fieldId** is the first element of a list of field identifiers.

If the LOWORD is set to FALSE then the HIWORD is not used and should be set to zero.

DA_FIND_FIELDS

**Purpose** This query message is sent to a data bearing object to obtain the identities of data items (fields) associated with a particular textual label.

**Parameters** The LOWORD of **lParam** is set to a global handle to a label/value data structures of type:

```
                 typedef struct {
                     WORD              len;
                     char              value[1];
                 } FIELDVALUE;


                 typedef FIELDVALUE  FAR  *LPFIELDVALUE;
```

**len** is the size of the data item's content in bytes.

**value** is the first element of a null terminated string containing the data item's textual label.

The HIWORD is not used and should be set to zero.

**Return Value** The HIWORD of the return value is set to a global handle to a A list of field identifiers :

24

```
typedef            struct {
   WORD               fieldIds;
   WORD               fieldId[1];
} FIELDLIST;


typedef FIELDLIST  FAR  *LPFIELDLIST;
```

**fieldIds** the number of accessible data items.
**fieldId** is the first element of a list of field identifiers.
If the LOWORD is set to FALSE then the HIWORD is not used and should be set to zero.
If there are no data items that match the textual label then the return value should be set to null.

### DA__FIND__FIELDS

The global memory handle containing FIELDVALUE is allocated and freed by the caller.
The global memory containing the FIELDLIST is allocated by the callee and freed by the caller.
Note that **value** is defined as a single entry array of characters. This is to simplify calculating memory for allocation and freeing parameters. In fact the size of the **value** array is given in **len**.
The expression used to calculate the required memory is:
sizeof (FIELDVALUE) + ( sizeof (char) * len )
similarly, the FIELDLIST parameter size is given by:
sizeof (FIELDLIST) + ( sizeof (WORD) * FieldIds )

### DA__GET__FIELD

**Purpose**          This message is used to solicit the value of a specified date item (field).
**Parameters**       The LOWORD of **IParam** is set to the **fieldId** of the required data item (see notes).
**Return Value**     The LOWORD of the return value is set to TRUE if the specified data item is available, otherwise it is set to FALSE.
The HIWORD of the return value is set to a global handle to a data structure of type:

```
typedef            struct {
   WORD            len;
   char            value[1];
} FIELDVALUE;


typedef FIELDVALUE  FAR  *LPFIELDVALUE;
```

**len** is the size of the data item's content in bytes.
**value** is the first element of a null terminated string containing the data item's content.
If the LOWORD is set to FALSE then the HIWORD is not used and should be set to zero.

### DA__GET__LABEL

**Purpose**          This message is used to solicit the label of a specified date item (field).
**Parameters**       The LOWORD of **IParam** is set to the **fieldId** of the required data item (see notes).
**Return Value**     The LOWORD of the return value is set to TRUE if the specified data item is available, otherwise it is set to FALSE.
The HIWORD of the return value is set to a global handle to a data structure of type:

```
typedef              struct {
   WORD              len;
   char              value[1];
} FIELDVALUE;


typedef FIELDVALUE   FAR  *LPFIELDVALUE;
```

len is the size of the data item's label in bytes.
value is the first element of a null terminated string containing the data item's label.
If the LOWORD is set to FALSE then the HIWORD is not used and should be set to zero.

DA_SET_FIELD

| | |
|---|---|
| **Purpose** | This message is sent to a data bearing object to request that it changes the value of one of its data items (fields). |
| **Parameters** | The LOWORD of **IParam** is set to the **fieldId** of the required data item (see notes). The HIWORD of the return value is set to a global handle to a data structure of type: |

```
typedef              struct  {
   WORD              len;
   char              value[1];
} FIELDVALUE;


typedef FIELDVALUE   FAR  *LPFIELDVALUE;
```

len is the size of the data item's content in bytes.
value is the first element of a null terminated string containing the data item's content.

| | |
|---|---|
| **Return Value** | The LOWORD of the return value is set to TRUE if the required data was successfully changed, or FALSE otherwise. HIWORD is not used and should be set to zero.. |

DA_SET_LABEL

| | |
|---|---|
| **Purpose** | This message is sent to a data bearing object to request that it changes the label of one of its data items (fields). |
| **Parameters** | The LOWORD of **IParam** is set to the **fieldId** of the required data item (see notes). The HIWORD of the return value is set to a global handle to a data structure of type: |

```
typedef              struct {
                     WORD              len;
                     char              value[1];
} FIELDVALUE;


typedef FIELDVALUE   FAR  *LPFIELDVALUE;
```

len is the size of the data item's new label in bytes.
value is the first element of a null terminated string containing the data item's new label

| | |
|---|---|
| **Return Value** | The LOWORD of the return value is set to TRUE if the required data item's label was successfully changed, or FALSE otherwise. HIWORD is not used and should be set to zero.. |

DC__CHANGED__DATA

**Purpose**         This message is sent from a referent component to a referee object to announce that a portion of its data contents has changed.

**Parameters**      The LOWORD of **IParam** contains a global handle to a structure of the form:

```
typedef struct {
    OBJECTNAME          referentObject;
    WORD                destinationTag;
    WORD                fieldId;
}  DATACHANGENOTIFY;

typedef DATACHANGENOTIFYFAR *LPDATACHANGENOTIFY;
```

    **referentObject** is the PARAMETER scope name of the object holding the data item of interest.

**destinationTag** is an internal reference to a part of the destination object's internal state, this must never be altered by the source object.

**fieldId** is a reference to the part of the source object's data content of interest to the destination object.

The **HIWORD** is not used and will be zero.

**Return Value**    a return value is not defined for this message and should be set to zero.

DC__COUPLE__DATA

**Purpose**         This message is sent to a object to register an interest in any changes to the state of a particular data item.

**Parameters**      The LOWORD of **IParam** contains a global handle to a structure defined as:

```
typedef struct {
    OBJECTNAME          refereeName;
    WORD                destinationTag;
    WORD                fieldId;
}  DATACOUPLE;

typedef DATACOUPLE    FAR *LPDATACOUPLE;
```

    **refereeName** is the PARAMETER scope name of the object registering an interest.

**destinationTag** is an internal reference to a part of the referee object's internal state, this must not be changed by the referent object.

**fieldId** is a reference to the part of the source object's data content of interest to the referee object.

**Return Value**    The LOWORD of the return value should be set to TRUE to indicate success, otherwise it should be set to FALSE. The HIWORD is not used and should be set to zero.

DC__UNCOUPLE__DATA

**Purpose**         This message is sent to a data bearing object to notify it that a current object referee no longer wishes to maintain an interest in a specific data item.

**Parameters**      The LOWORD of **IParam** contains a global handle to a structure of defined as:

```
typedef struct {
    OBJECTNAME          refereeName;
    WORD                destinationTag;
    WORD                fieldId;
}   DATACOUPLE;


typedef DATACOUPLE   FAR *LPDATACOUPLE;
```

**refereeName** is the PARAMETER scope name of the object that is currently interested in this particular data item.

**destinationTag** is not used.

**fieldId** is a local reference to the data item of interest.

**Return Value**     The LOWORD of the return value should be set to TRUE to indicate success, otherwise it should be set to FALSE. The HIWORD is not used and should be set to zero.

<u>User Session</u>

This section will describe a user session showing:

i) how a task is configured using the system;

ii) use of the system to perform the task;

iii) changing the task configuration.

As will be described, a system according to the present invention is not 'moded' as such in that configuration of a task and execution of the task happen at the same time.

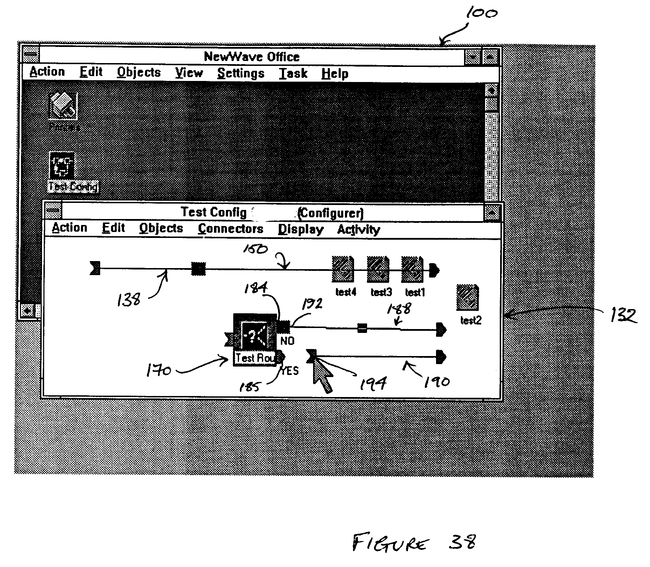

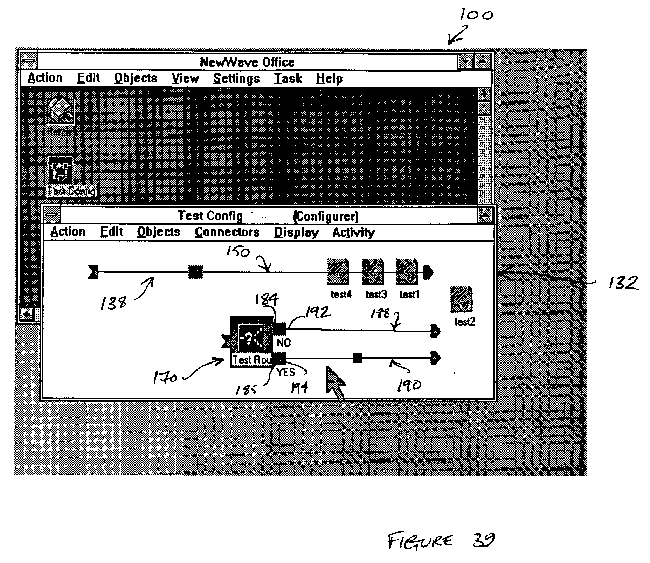

Figures 6 to 48 show example screens from a computer system embodying the present invention. In each case, the top level NewWave Office window is shown together with any additional windows. The components such as the menu bar, scroll bars etc of a window are widely familiar and were referenced in Figure 2 and will not be given new reference numbers except as required for the purposes of the description. The cursor is shown as an arrow throughout and will not be given a reference number.

Figure 6 shows the NewWave Office window 100 in which the item 'Objects' has been selected from the menu bar 102 and the 'Create a New' option has been selected from the resultant drop-down menu 104. This causes a 'Create a New' window 106 to open as shown in Figure 7 which reveals five species of object which can be created:

| | |
|---|---|
| Lockable Folder | 108 (not relevant to this invention) |
| Configurer | 110 |
| Executer | 112 (Activity Object) |
| Expense Form | 114 (Mobile Object) |
| Container | 116 (Activity Object) |

The user selects the Configurer Object, which is consequently highlighted, and is invited to supply a title for the object to be created in the box 118. The user is also invited to confirm the selections made in the window 106 by selecting an 'OK button' 120 or can cancel previous selections using a 'Cancel button' 122 or can select the Help menu using a 'Help button' 124. A further box 126 is available to permit customisation of icons but its title 128 is shown greyed out because the selected object cannot be customised in this way.

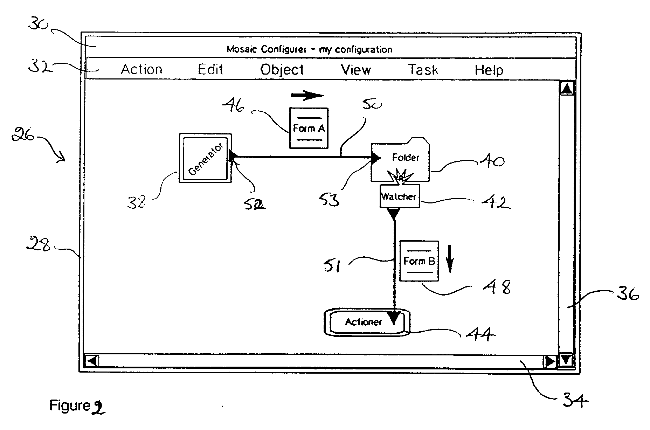

Figure 8 shows the NewWave Office now containing a newly-created Configurer Object 130. The Configurer Object is opened resulting in a window 132 displaying a menu bar 134 from which the choice 'Connectors' is selected as shown in Figure 9. This results in drop-down menu 136 from which the 'New Pipe' option is selected.

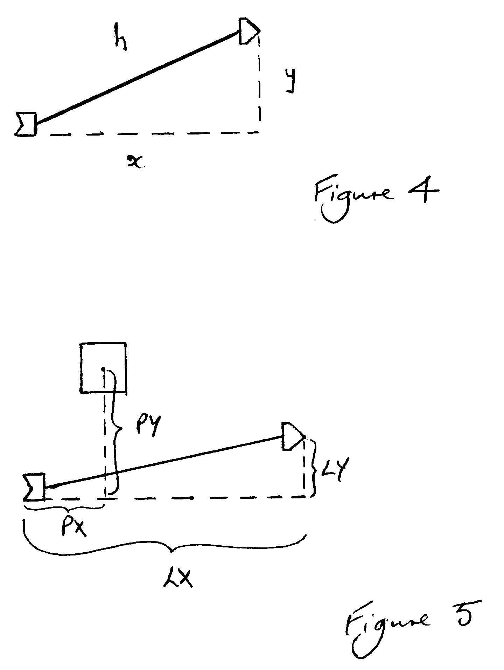

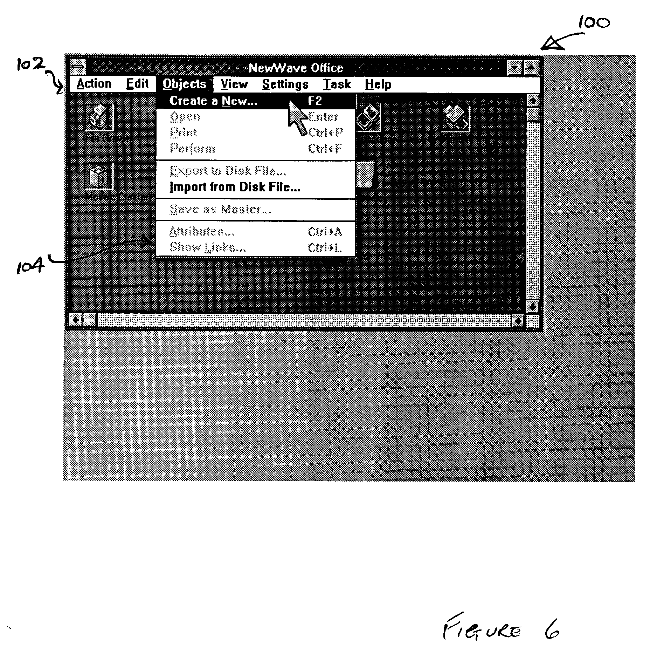

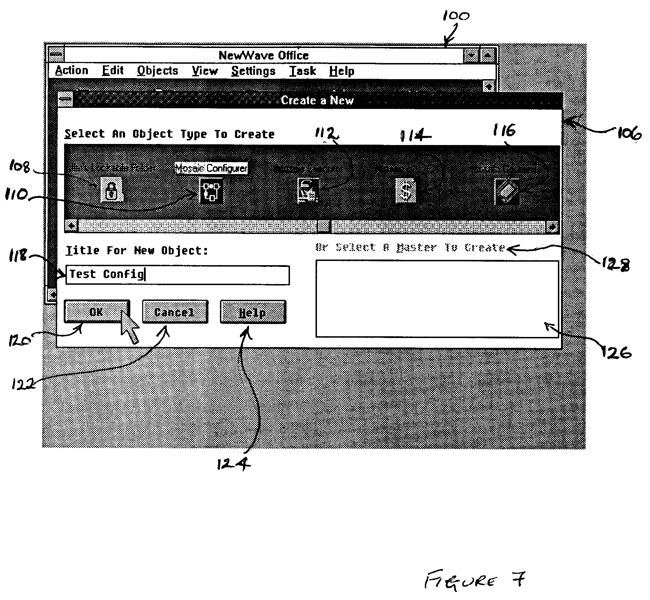

This results in the creation of a new Pipe Component 138 as a child of the Configurer Object 130 of Figure 8 as shown in Figure 10. The Pipe Component 138 has an input socket 140 and an output plug 142. It is shown in Figure 10 with a central blob 144 the purpose of which is to indicate that the Pipe Component 138 is currently selected.

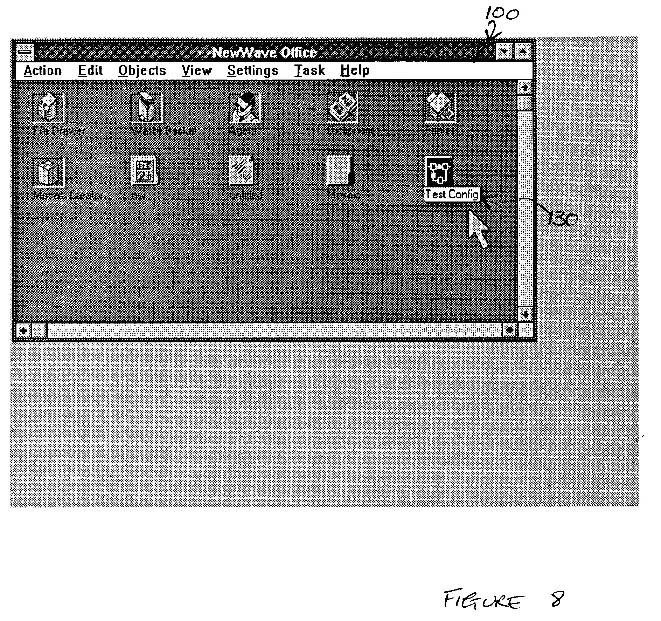

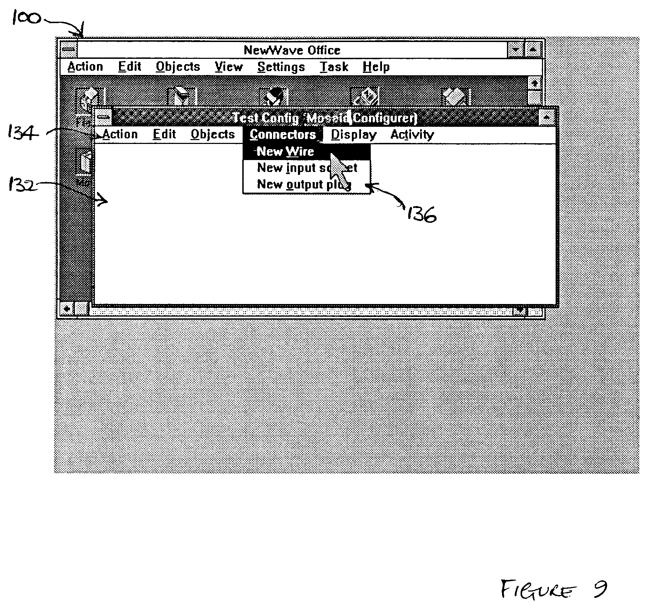

Figure 11 shows the effect of dragging the output plug 142 of the Pipe Component 138 which lengthens the Pipe Component 138 whilst leaving its input socket 140 in position.

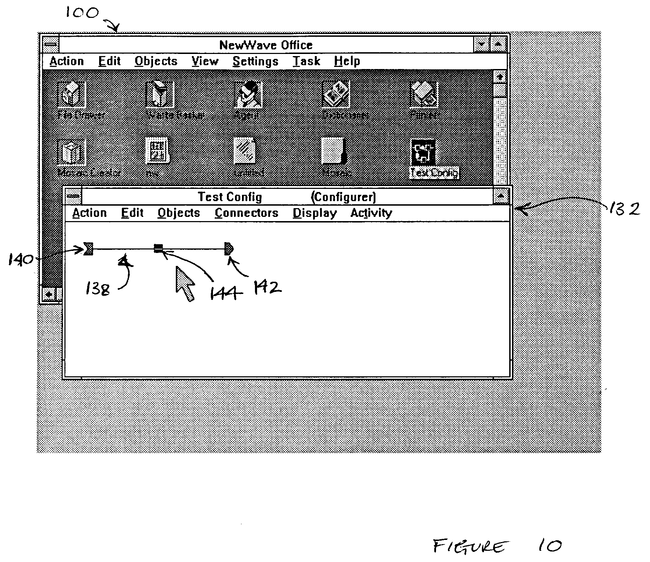

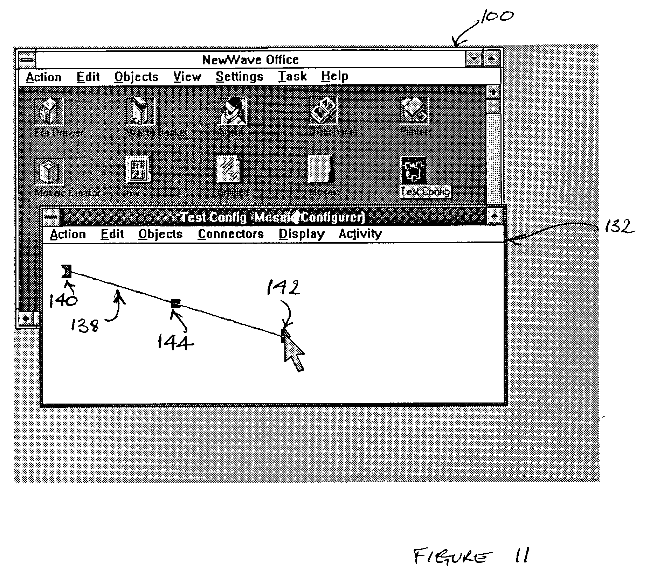

Alternatively, the Pipe Component 138 can be moved in its entirety by selecting the body of the Pipe Component 138 and dragging it to a new position as shown in Figure 12.

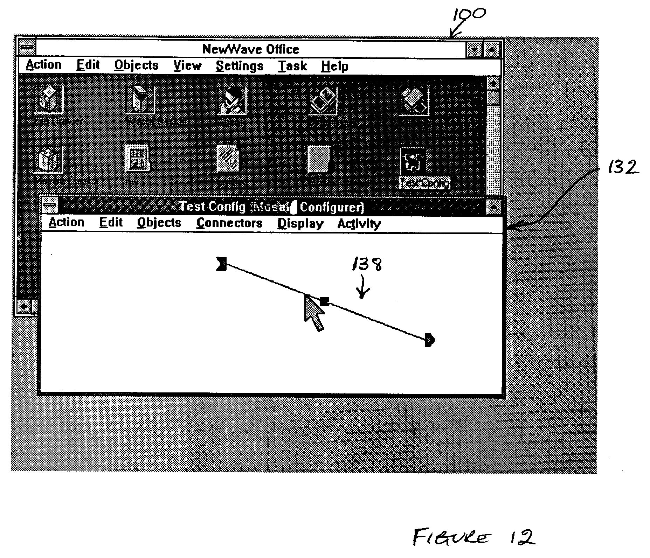

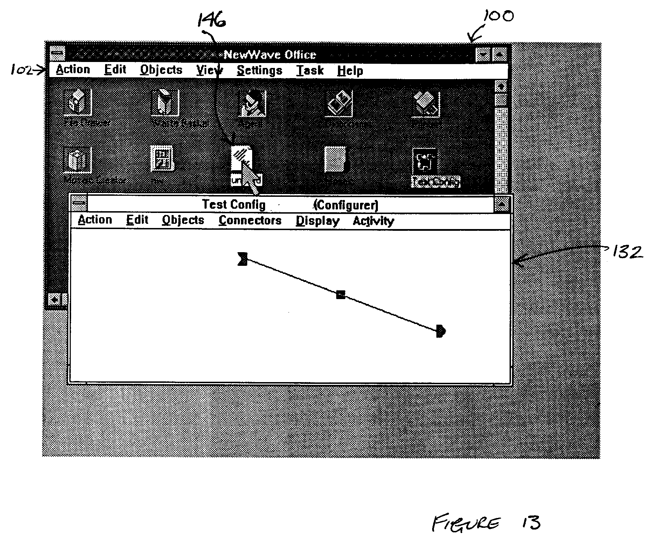

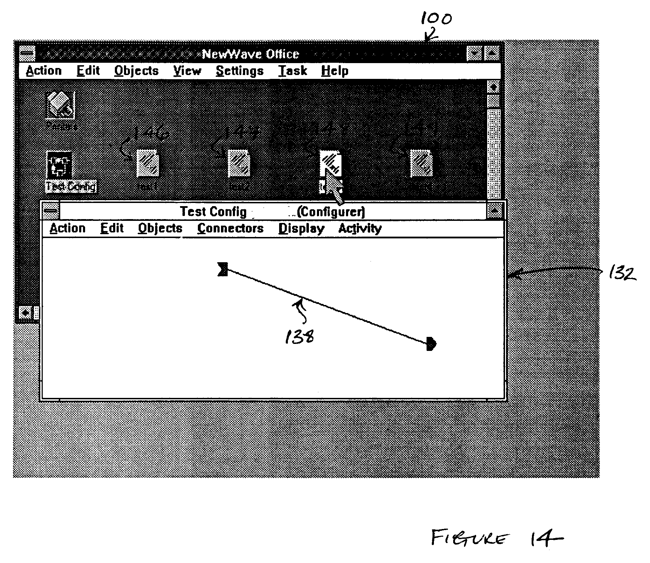

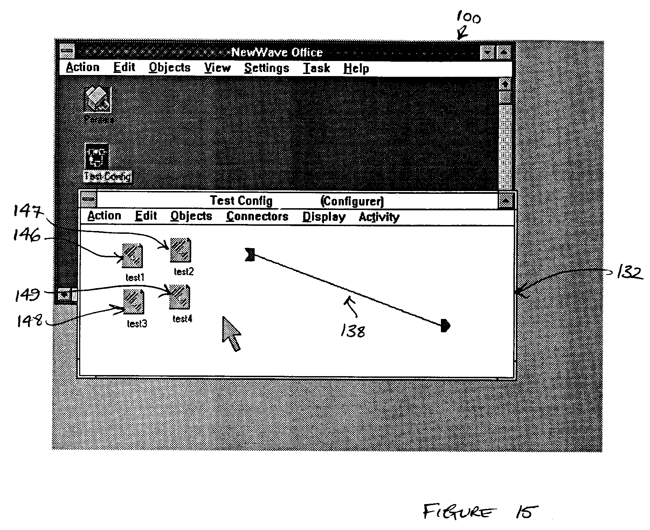

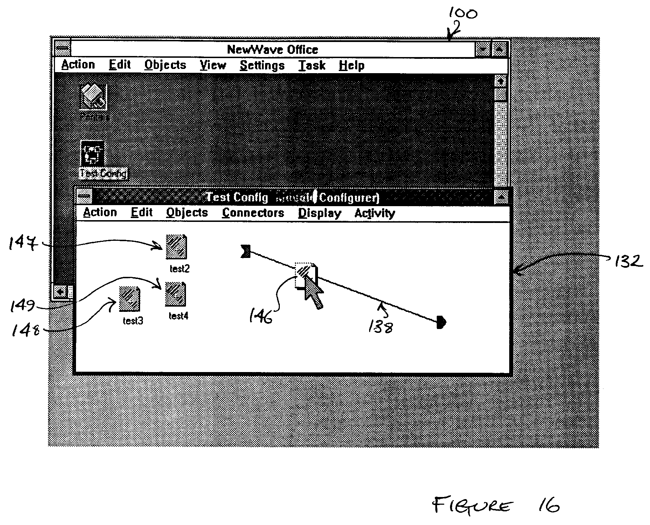

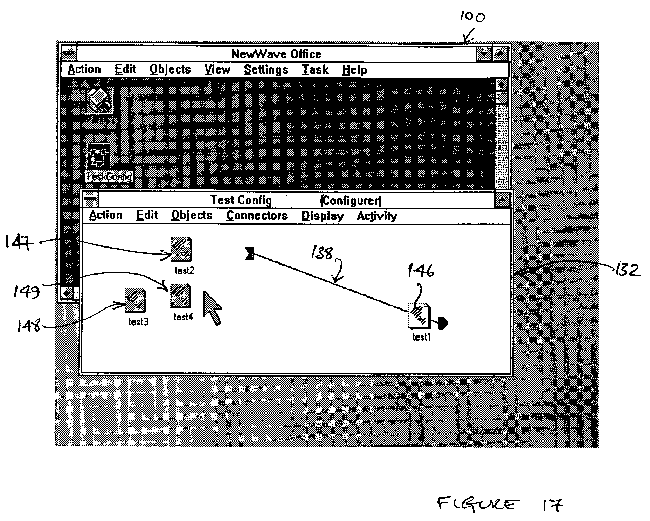

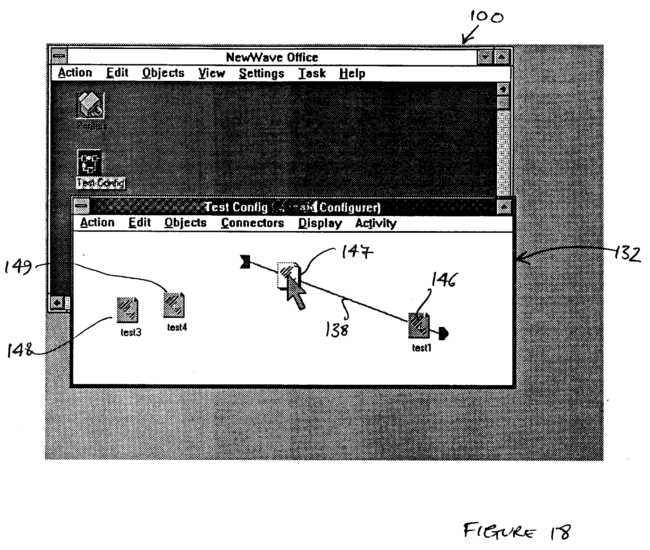

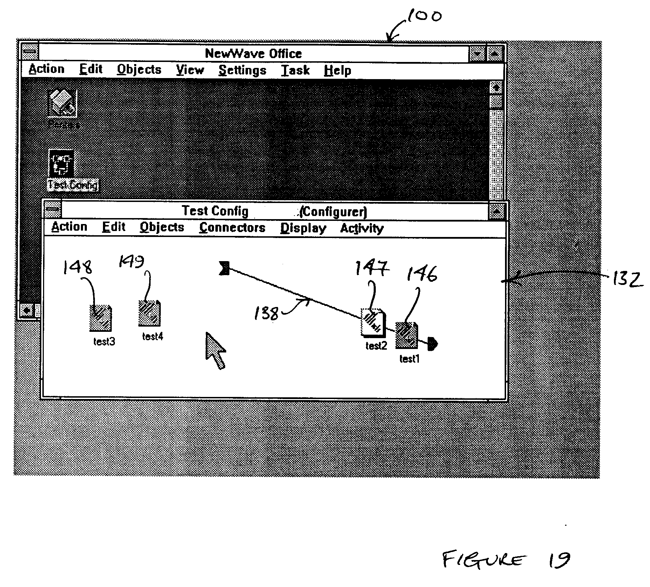

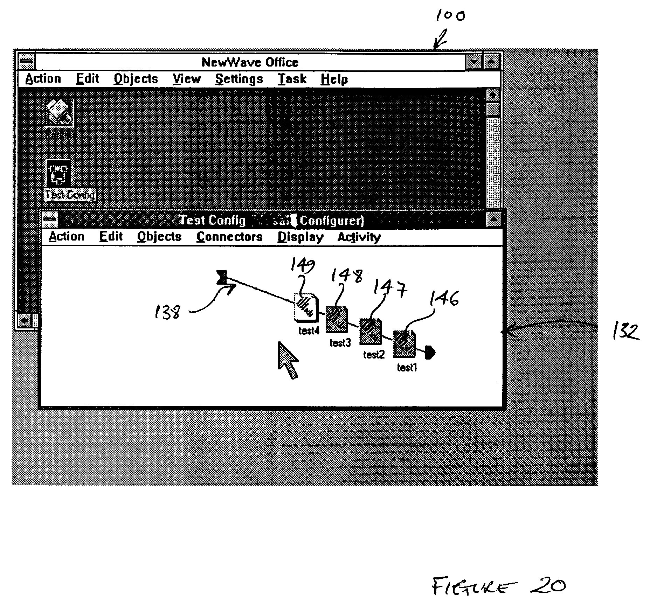

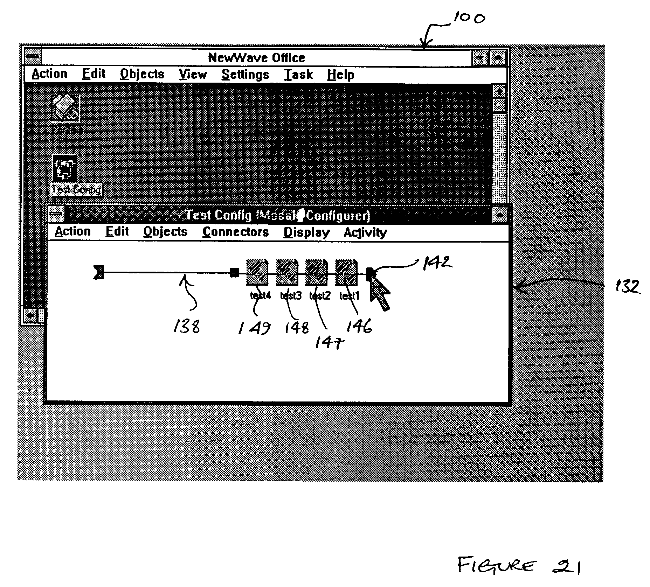

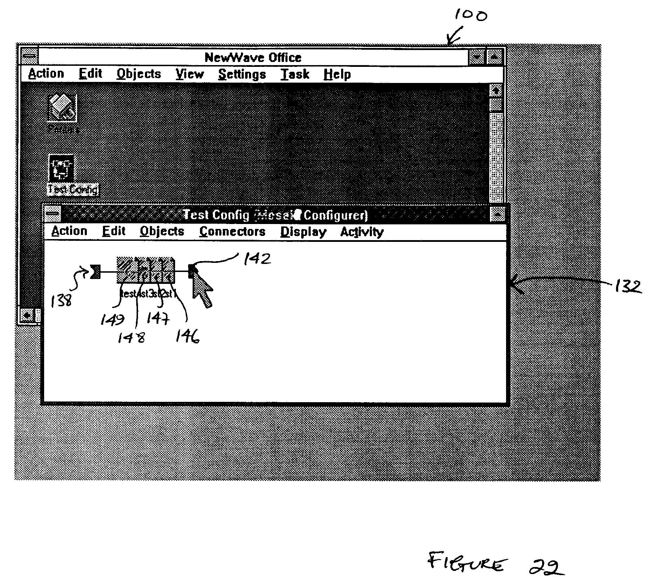

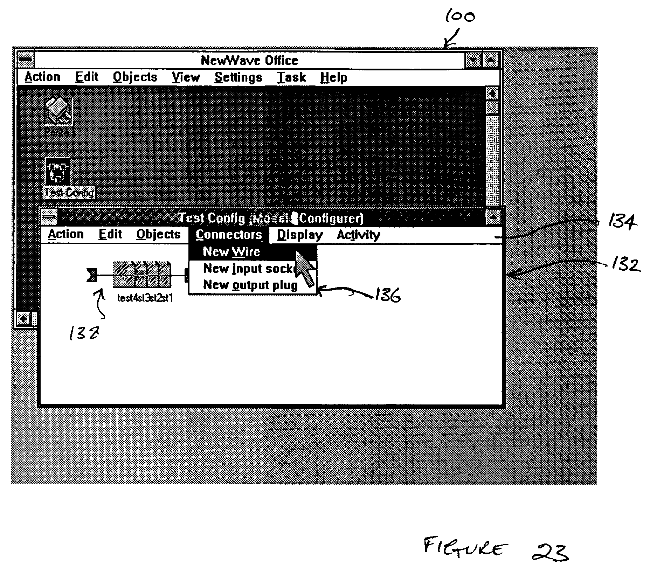

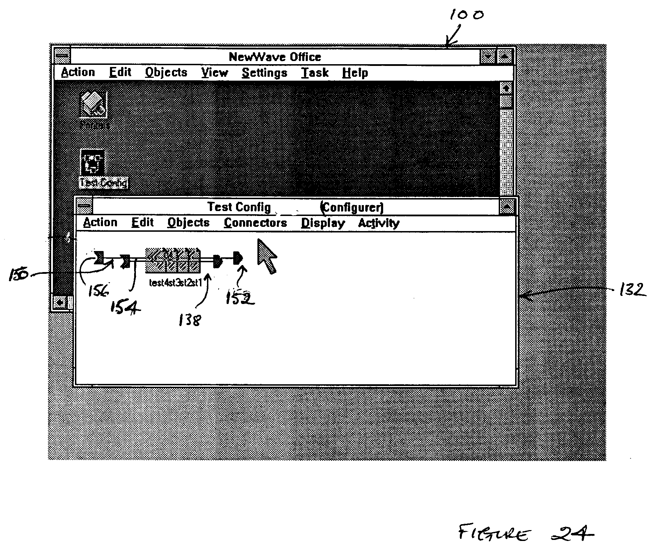

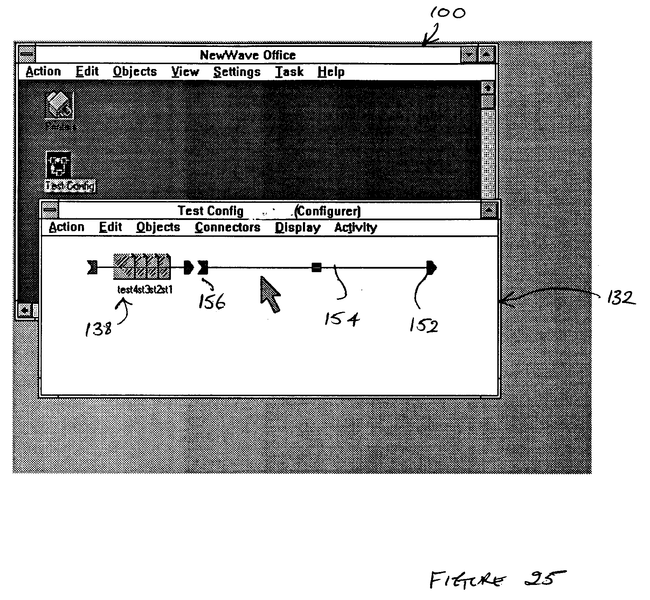

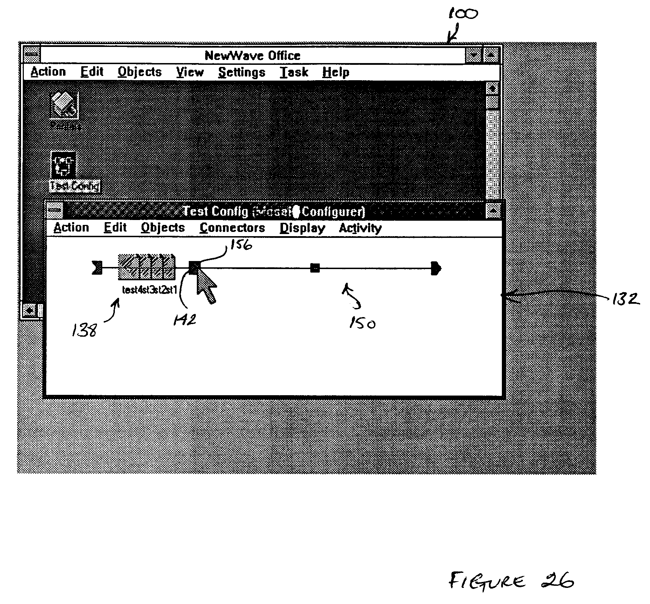

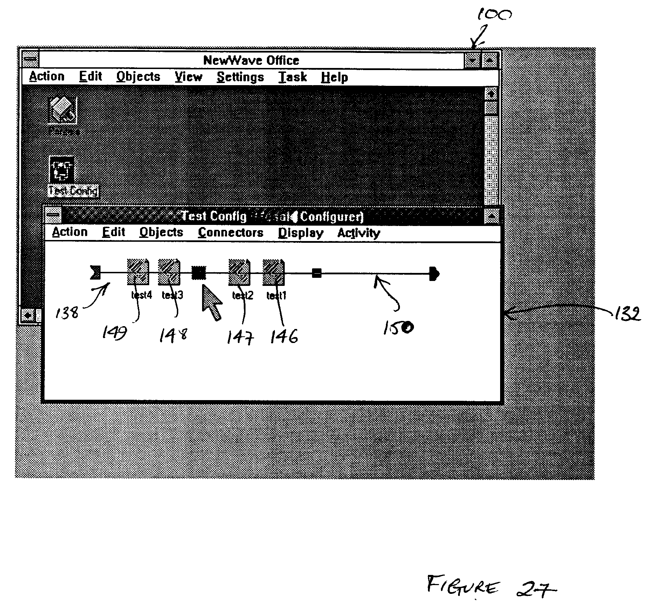

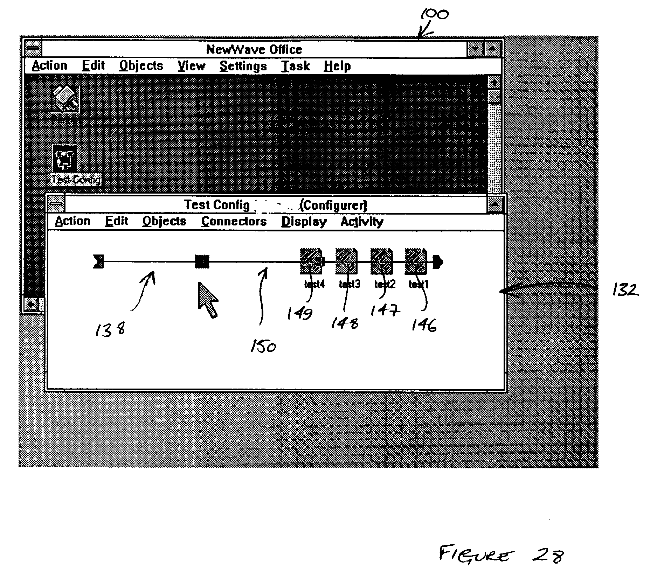

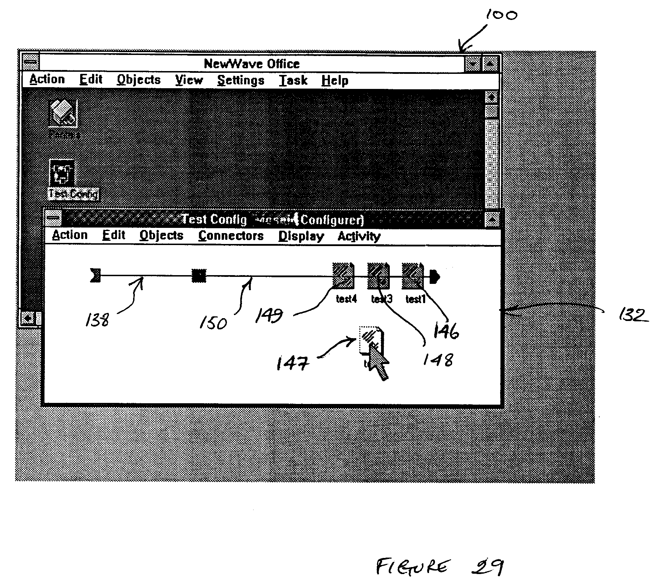

In Figure 13 a NewWave text note 146 has been selected. This is copied by selecting Action from the menu bar 102 of the window 100 and then selecting 'Copy' from the sub-menu options followed by 'Paste' four times to create four copies. These four text notes 146-149 are then entitled Test 1-Test 4 respectively as shown in Figure 14 in the window 100. The text notes 146-149 are then dragged into the configurer object window 132 as shown in Figure 15. The text note 146 entitled test 1 is then dragged until it is over the Pipe Component 138 as shown in figure 16. Figure 17 shows that, once the mouse button is released, the text note 146 moves towards the end of the Pipe Component 138. In figure 18, the text note 147 has been dragged to the pipe component 138 and, once the mouse button is released, the text note 147 moves to the end of the Pipe Component 138 behind the text note 146 as shown in figure 19. Figure 20 shows the situation when all four of the text notes 146-149 have been dragged to and dropped on the Pipe Component 138 and now form a queue at the end of the Pipe Component 138.

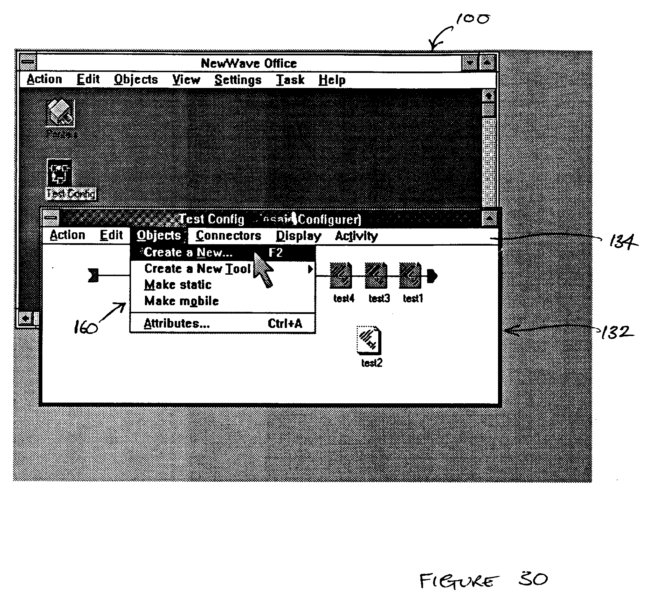

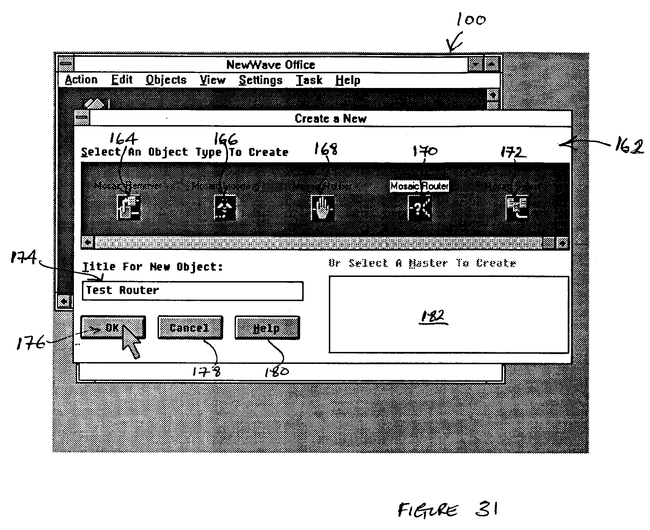

Figure 21 shows the effect of dragging the output socket 142 of the Pipe Component 138. The text notes 146-149 remain on the Pipe Component 138. Figure 22 shows the effect of shortening the Pipe Connector 138 which is to cause the icons for the text notes 146-149 to overlap. This shortening is achieved by selecting and dragging the output plug 142 of the pipe connector 138.

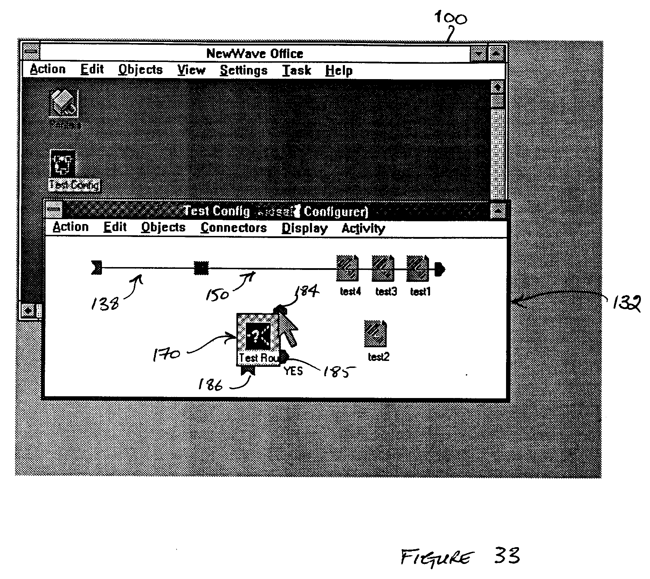

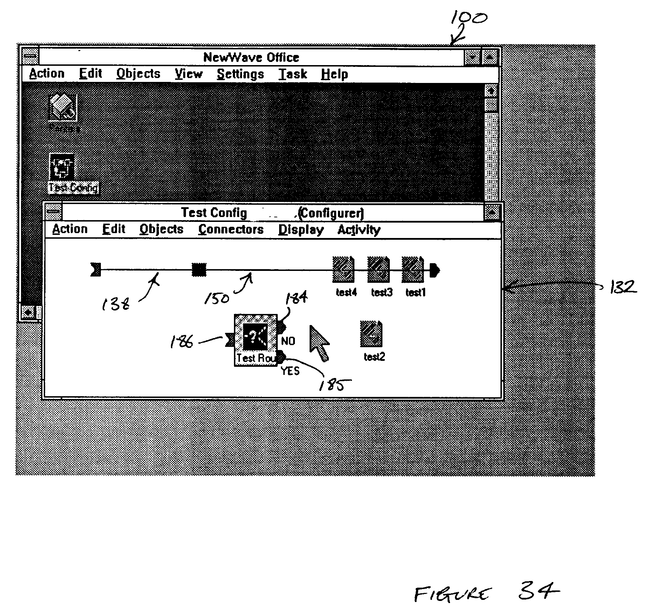

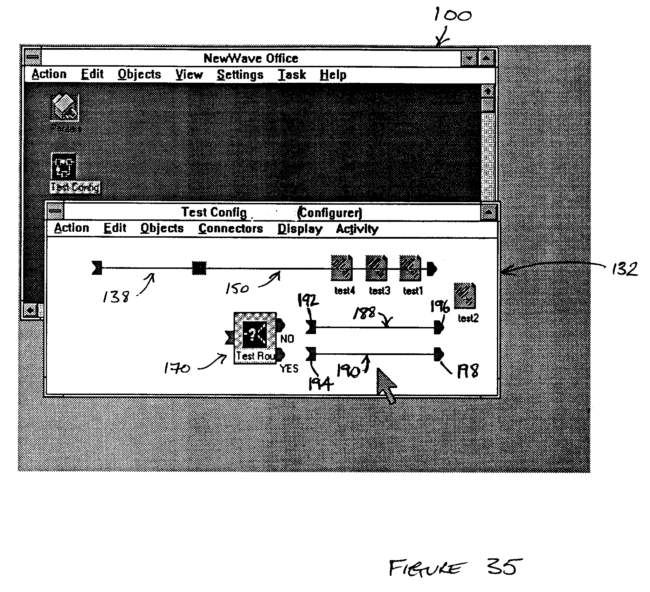

In Figure 23 the Connectors option from the menu bar 134 of the window 132 has been selected to show the drop down menu 136 once more. Again the option for New Pipe is selected. Figure 24 shows the new pipe component 150 just above the pre existing Pipe Component 138. Like the Pipe Component 138, the Pipe Component 150 has an output plug 152, a body 154 and an input socket 156. Figure 25 shows the Pipe Component 150 having been repositioned to the right of the Pipe Component 138 and lengthened by selecting the output socket 152 and dragging that to the right. Figure 26 shows the input socket 156 of the Pipe Component 150 having been selected and dragged to the output plug 142 of the pipe component 138 and dropped onto the output plug 142. This causes the two Pipe Components 138 and 150 to plug together, accompanied by a colour change of the Connectors 142 and 156. Subsequently, as shown in Figures 27 and 28, the text notes 146-149 automatically move from the Pipe Component 138 onto the Pipe Component 150 to form a queue at the end of the Pipe Component 150. When one of the text notes 147 is selected and dragged off the Pipe Component 150, as shown in Figure 29, the text notes 148 and 149 automatically move up behind the text note 146.

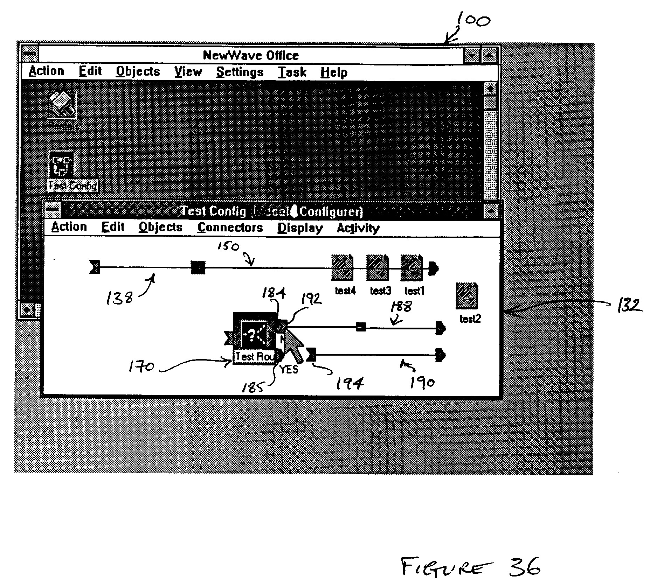

In Figure 30 the 'Objects' option from the menu bar 134 has been selected to reveal a drop down menu 160 from which the 'Create a New' option has been selected. This causes a 'Create a New' window 162 to open as shown in figure 31 revealing five object types which it is possible to instantiate. These are:

Remove objects 164  (Activity Object)

Beeline 166       "

Notifer object 168     "

Router 170       "

Selector 172     "

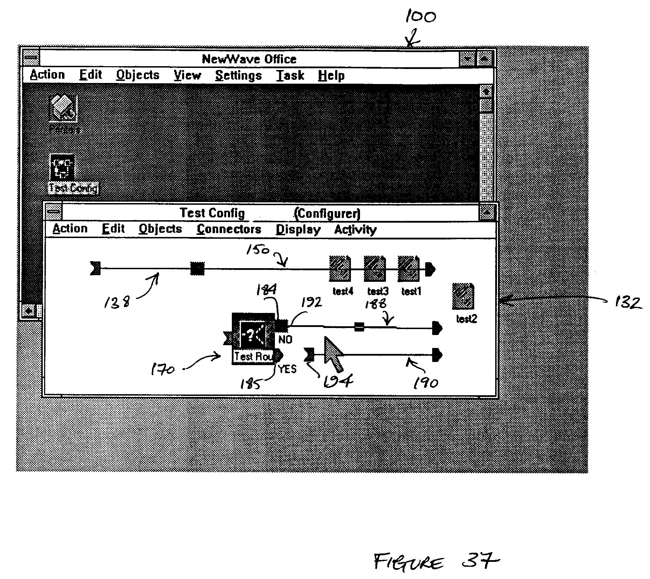

The user selects the router object 170 and is invited to provide a title for the new object in the box 174. The title chosen is "test router". The user is then invited to confirm the previous choices by selecting the "OK" button 176. As described previously, 'Cancel' and 'Help' buttons 178 and 180 are also available as is a box 182 for customising icons. The new router object 170 thus appears in the configurer object window 132 as shown in Figure 32. The router object 170 has three Connectors 184-186. The Connector 186 is an input Connector and the Connectors 184 and 185 are No and Yes output Connectors respectively. By selecting a Connector and dragging it, the user can reposition that Connector as shown in Figure 33. The movement of each Connector is constrained to be around the boundary of the icon of its parent object only. The final chosen positions of the Connectors 184-186 are shown in Figure 34. Subsequently, the user causes the creation of two further Pipe Components 188 and 190 by following the same process as described with reference to figures 23-25. The Pipe Components 188 and 190 have input sockets 192 and 194 and output sockets 196 and 198 respectively. The Pipe Components 188 and 190 are connected to the output Connectors 184 and 185 of the router object 170 by dragging the input sockets 192 and 194 of the Pipe Components 188 and 190 and dropping them onto the Connectors 184 and 185 of the router object 170. The process is illustrated in Figures 36-39 resulting in connection of the Pipe Components 188 and 190 to the No and Yes output Connectors 184 and 185 of the router object 170.

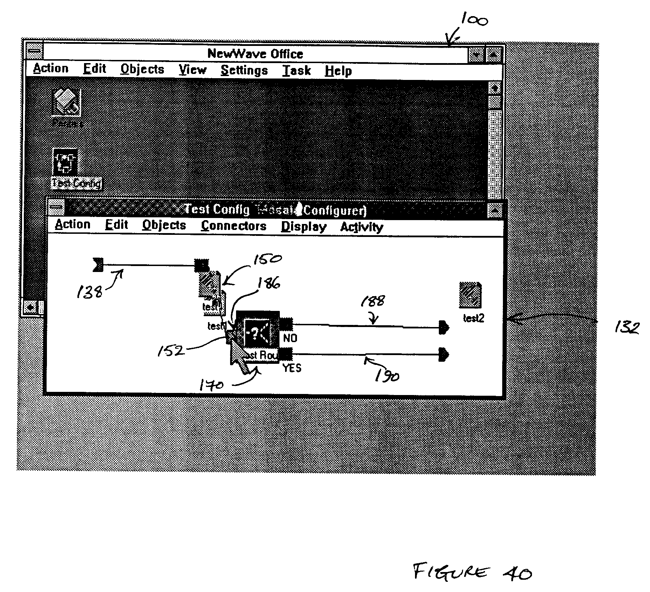

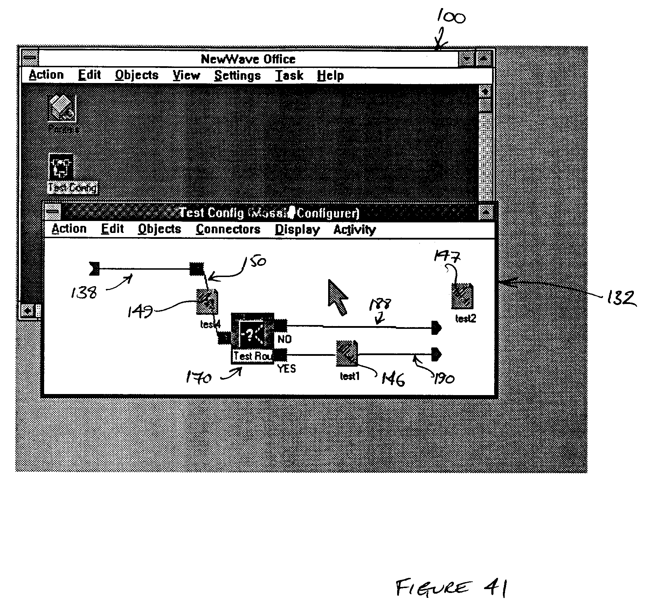

Next, the output plug 152 of the Pipe Component 150 is dragged onto the input Connector 186 of the router object 170 as shown in Figure 40. Figure 41 shows the text notes 146,148 and 149 which were on the Pipe Component 150 automatically flowing through the router object 170 and onto the Pipe Component 190 connected to the Yes output Connector 185 of the router object 170. The configurer object is then emptied by selecting each object in turn and deleting it using the Edit menu, the delete key or the delete sub-menu item in the Configurer window 132.

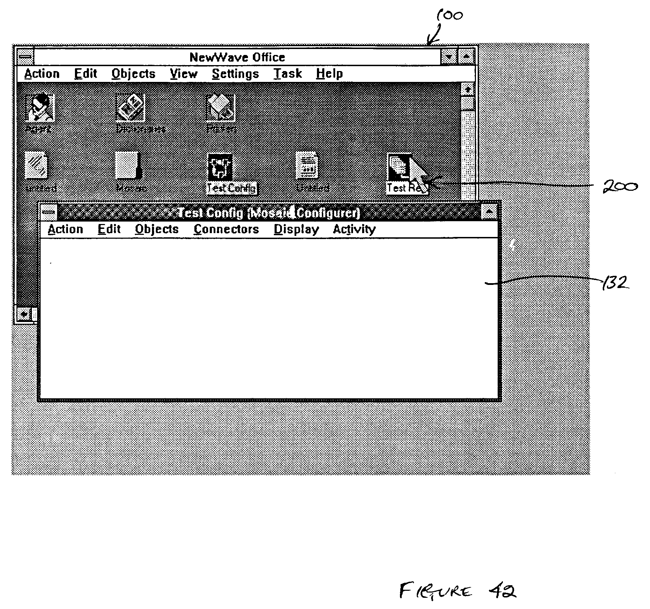

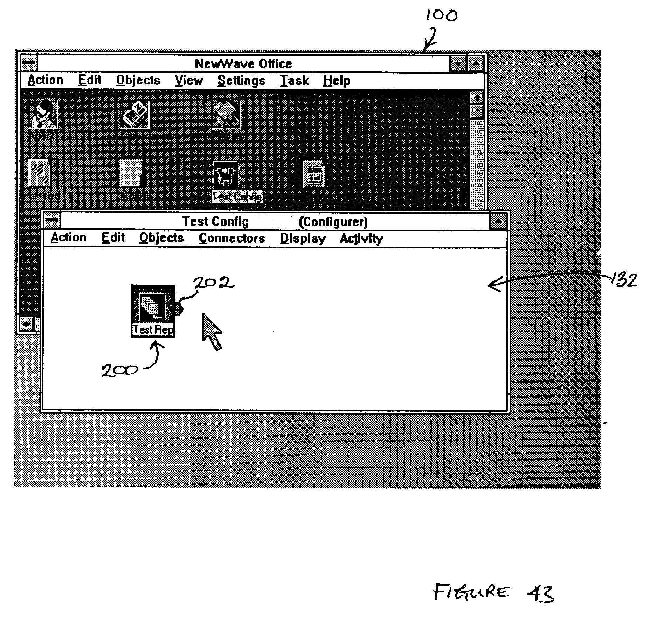

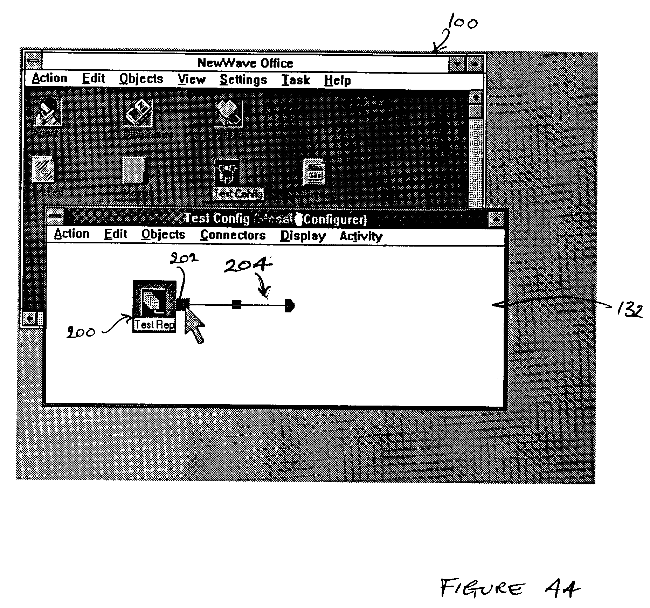

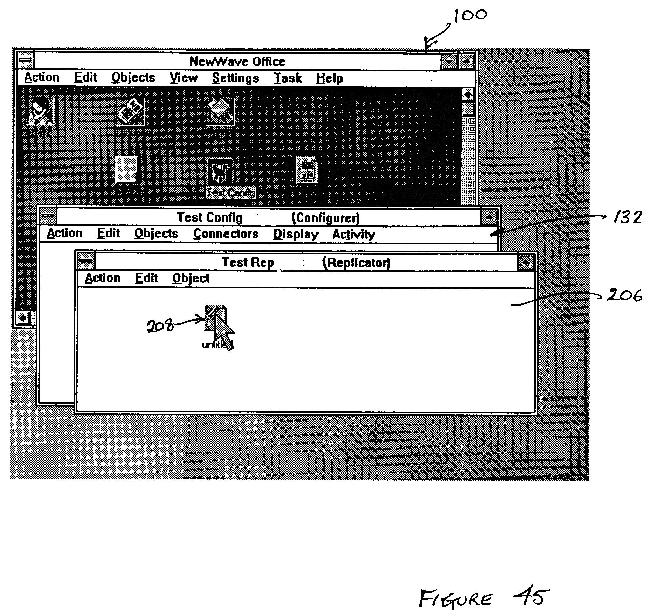

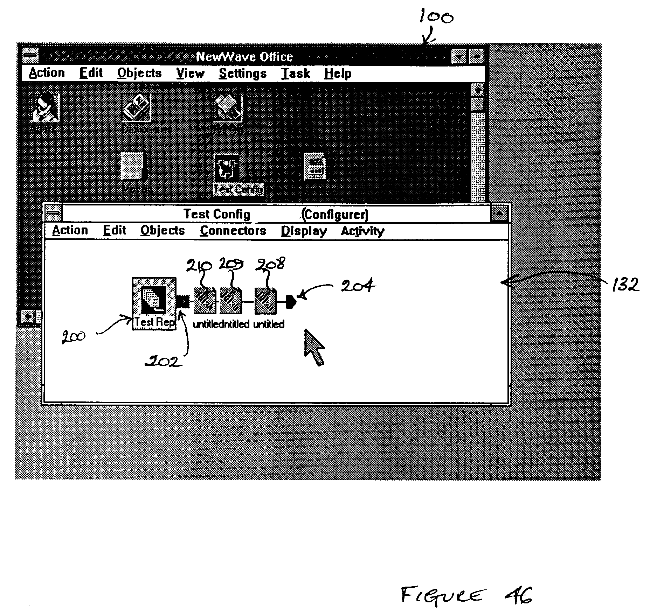

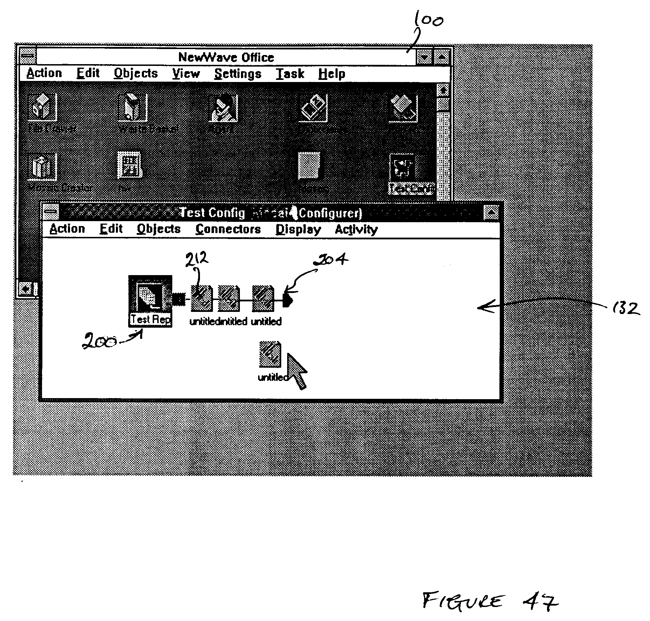

Figure 42 shows the selection of a replicator object 200 from the main window 100 and this is then dragged into the configurer object window 132 as shown in figure 43. Connectors are not features included in the NewWave software which is why only the icon of the replicator object 200, and not its output Connector, is seen in the main window 100. The replicator object 200 has a single output Connector 202. A Pipe Component 204 is created as previously described and is connected to the output Connector 202 of the replicator object 200 by dragging the input socket of the Pipe Component 204 over the output connector 202 as shown in Figure 44. The replicator object 200 is opened by selecting it and this causes the appearance of a further window 206 in Figure 45. A text note 208 is dragged into the replicator object window 206 from the main window 100. The function of a replicator object is to duplicate objects inserted into it. Therefore, the replicator object 200 proceeds to send copies of the text note 208 through its output connector 202 onto the Pipe Component 204 until the Pipe Component 204 is full with three text notes 208-210 as shown in Figure 46. Dragging one of the text notes 208-210 from the Pipe Component 204 results in the replicator object 200 sending a further text note 212 onto the Pipe Component 204 as shown in Figure 47.

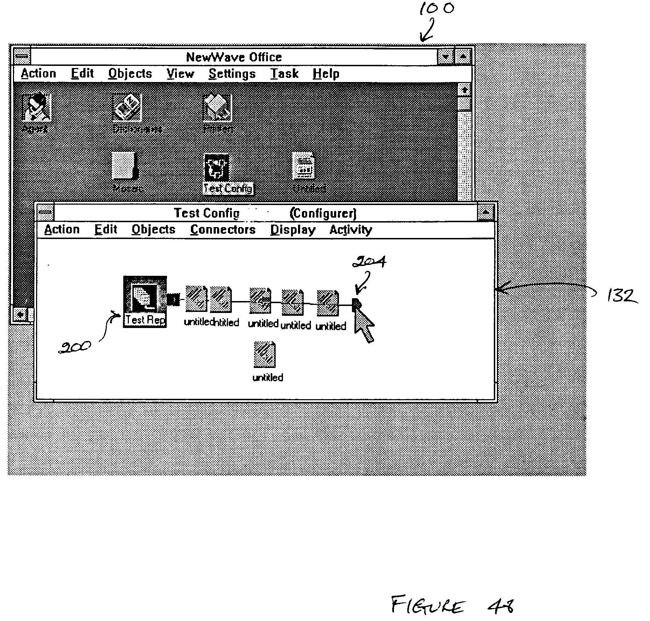

As shown in Figure 48, lengthening the Pipe Component 204 increasing its capacity to five text notes results in two further text notes 214 and 216 being produced by the replicator object 200 and passed onto the Pipe Component 204.

## Claims

1. An object based-computer system comprising means for storing objects, handling inter-object messaging and object processing and a graphical user interface for representing objects to a user comprising:

   a first class of object (38) for holding user data and/or performing an application-level function and which is capable of maintaining references to another object;

   a second class of object (50) for acting as an intermediary between two objects of the first class so as to transfer another object (46) between the two objects of the first class;

   a user interface enabling a user to select objects of the first class (38) and to link these together using objects (50) of the second class in order to configure a user-defined task, and

   means for transferring objects (46) between objects (38) of the first class via objects of the second class (50) in a manner so that the progress of such transfers is indicated graphically to the user.

2. A system according to claim 1 comprising a mechanism for recognising user input events concerning the intermediary objects (50) and for responding to such events whilst user-defined tasks are being performed

3. A system according to any preceding claim wherein an intermediary object (50) is configured also to accept an object (46) to be transferred between two objects of the first class directly as a result of a specified user action.

4. A system according to any preceding claim wherein an intermediary object (50) is configured so that an object (46) can be removed therefrom by a user.

5. A system according to claim 1 comprising means for animating the display of the progress of transferring an object (46) via an intermediary object (50).

6. A system according to claim 1 wherein an intermediary object (50) is configured for holding a plurality of objects (46) at one time.

7. A system according to claim 1 comprising a plurality of intermediary objects (50) having standardised behaviour.

8. A system according to claim 1 configured so that the transfer of objects (46) via an intermediary object (50) proceeds as a background task whilst other operations are being performed.

9. A system according to claim 1 wherein one or more classes of object is designed to support at least one generic semantic interface enabling persistent coupling between two objects which both support the same generic semantic interface.

10. A system according to claim 9 wherein the capacity for a persistent coupling is represented to a user by a connector (52, 53) associated with an object as visually displayed.

FIGURE A

FIGURE 1

FIGURE 3

30

32

26

28

36

34

Mosaic Configurer – my configuration

Action    Edit    Object    View    Task    Help

46

50

Form A

Generator

32

52

53

Folder    40

Watcher    42

51

Form B

48

Actioner    44

Figure 2

Figure 4

Figure 5

EP 0 567 699 A1

FIGURE 6

FIGURE 7

100

FIGURE 8

FIGURE 9

FIGURE 10

FIGURE 11

FIGURE 12

FIGURE 13

100

FIGURE 14

FIGURE 15

FIGURE 16

FIGURE 17

*100*

| NewWave Office |
| Action  Edit  Objects  View  Settings  Task  Help |

Parts

Test Config

| Test Config (Configurer) |
| Action  Edit  Objects  Connectors  Display  Activity |

*149*

*147*

*132*

*146*

*138*

test3   test4

*148*

test1

FIGURE 18

**EP 0 567 699 A1**

FIGURE 19

49

FIGURE 20

FIGURE 21

FIGURE 22

FIGURE 23

FIGURE 24

FIGURE 25

*100*

| NewWave Office |
| --- |
| **Action** **Edit** **Objects** **View** **Settings** **Task** **Help** |

Test Config

| Test Config (Mosaic Configurer) |
| --- |
| **Action** **Edit** **Objects** **Connectors** **Display** **Activity** |

*156*

test4st3st2st1

*138*

*142*

*150*

*132*

FIGURE 26

FIGURE 27

*100*

**NewWave Office**

Action    Edit    Objects    View    Settings    Task    Help

Test Config

Test Config        (Configurer)

Action    Edit    Objects    Connectors    Display    Activity

test4    test3    test2    test1

*132*

*138*    *150*    *149*    *148*    *147*    *146*

FIGURE 28

FIGURE 29

*100*

FIGURE 30

100

NewWave Office

Action   Edit   Objects   View   Settings   Task   Help

Create a New

164                    166
Select/An Object Type)To Create       168            170            172                    162

Mosaic          Mosaic                    Mosaic Router

Title For New Object:                    Or Select A Master To Create

174

Test Router

176          > OK      Cancel      Help                    182

178      180

FIGURE 31

FIGURE 32

100

**NewWave Office**

Action  Edit  Objects  View  Settings  Task  Help

Test Config

**Test Config    (Configurer)**

Action  Edit  Objects  Connectors  Display  Activity

138

150

184

170

test4  test3  test1

Test Rou

test2

186

YES

185

132

FIGURE 33

*100*

| NewWave Office | |
|---|---|
| **Action  Edit  Objects  View  Settings  Task  Help** | |

Test Config

**Test Config          (Configurer)**

**Action    Edit    Objects    Connectors    Display    Activity**

*138*   *150*   *184*

test4   test3   test1

*132*

*186*   NO

Test Rou    test2

YES   *185*

FIGURE 34

*100*

**NewWave Office**

Action  Edit  Objects  View  Settings  Task  Help

*132*

**Test Config    (Configurer)**

Action  Edit  Objects  Connectors  Display  Activity

*138*

*150*

test4  test3  test1

*192*

*188*

*196*

test2

Test Rou

NO

*170*

YES

*194*

*190*

*198*

FIGURE 35

FIGURE 36

FIGURE 37

FIGURE 38

FIGURE 39

FIGURE 40

EP 0 567 699 A1

FIGURE 41

71

FIGURE 42

100

## NewWave Office

| Action | Edit | Objects | View | Settings | Task | Help |

### Test Config          (Configurer)

| Action | Edit | Objects | Connectors | Display | Activity |

202

132

Test Rep

200

FIGURE 43

FIGURE 44

FIGURE 45

FIGURE 46

FIGURE 47

FIGURE 48

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 254 438 (TEKTRONIX INC.)<br>* abstract *<br>* column 13, line 39 - column 15, line 22 *<br>* column 35, line 17 - line 23 *<br>* figures 14-17 * | 1,5,6 | G06F9/44<br>G06F9/46<br>G06F3/033 |
| Y | IDEM | 2-4,7,9,10 | |
| Y | RESEARCH DISCLOSURE.<br>vol. 310, no. 051, February 1990, NEW YORK, US<br>page 124 'PROCESS/PROCESSOR ICONS AND QUEUES'<br>* abstract * | 2-4 | |
| A | IDEM | 1,5,6 | |
| Y | COMPUTER.<br>vol. 22, no. 10, October 1989, LOS ALAMITOS, CA, US<br>pages 53 - 65<br>J. KRAMER ET AL. 'GRAPHICAL CONFIGURATION PROGRAMMING'<br>* page 54, right column, line 24 - page 56, middle column, line 2 *<br>* page 57, right column, line 4 - page 58, right column, line 8 *<br>* page 59 - page 61; figures *<br>* page 63, right column, line 5 - line 29 *<br>* figures 1-17 * | 9,10 | |
| A | IDEM | 1,2 | |

TECHNICAL FIELDS SEARCHED (Int. Cl.5)

G06F

-/--

The present search report has been drawn up for all claims

| Place of search | Date of completion of the search | Examiner |
|---|---|---|
| THE HAGUE | 21 DECEMBER 1992 | JONASSON J.T. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | IEEE TRANSACTIONS ON SOFTWARE ENGINEERING. vol. 14, no. 6, June 1988, NEW YORK, US pages 774 - 786 G. FISHER 'AN OVERVIEW OF A GRAPHICAL MULTILANGUAGE APPLICATIONS ENVIRONMENT' * page 782, left column, line 13 - page 784 * * page 785, right column, line 29 - line 36 * * figures 1,3,7,8 * | 7 | |
| A | IDEM | 1,2 | |
| A | DATABASE WPIL Section EI, Week 8942, Derwent Publications Ltd., London, GB; Class T01, AN 89-306934 & RESEARCH DISCLOSURE. vol. 305, no. 029, September 1989 'ANIMATED ACTION UPON MULTIPLE OBJECTS' * abstract * | 1-6 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 21 DECEMBER 1992 | JONASSON J.T. |

EPO FORM 1503 03.82 (P0401)